# EUROPEAN PATENT SPECIFICATION

(11) **EP 1 767 599 B1**
(45) Date of publication and mention of the grant of the patent: **11.06.2008**
(21) Application number: 06020109.2
(22) Date of filing: 26.09.2006
(51) Int. Cl.: C09D 11/02

(54) **Ink composition for inkjet and method for preparing the same**
Tinte für den Tintenstrahldruck und Methode zur Herstellung derselben
Composition d' encre pour enregistrement par jet d' encre et procédé de preparation

(30) Priority: 26.09.2005 JP 2005278801
(43) Date of publication of application: 28.03.2007
(73) Proprietor: FUJIFILM Corporation, Minato-ku Tokyo (JP)
(72) Inventor: Sakasai, Yutaka c/o Fuji Photo Film Co., Ltd., Haibara-gun, Shizuoka-ken (JP)
(74) Representative: Hoffmann, Klaus

(56) References cited:
- EP-A2- 1 302 312

## Description

### BACKGROUND OF THE INVENTION

### Field of the Invention

The invention relates to an ink composition for inkjet recording and a method for preparing the same. More particularly, the invention relates to an ink composition that is preferably used to form an image area of a planographic printing plate using an inkjet recording process, and a method for preparing the ink composition for inkjet recording that is useful for preparing the planographic printing plate.

### Description of the Related Art

Examples of image recording methods for forming an image on a recording medium using an image data signal include an electrophotography process, a sublimation-type and melt-type thermal transfer process, and an inkjet process. Among the processes, in the inkjet process, since ink is discharged only on a desired image area using a low-priced device to directly form an image on a recording medium, whereby it is possible to efficiently use the ink, running costs are low. Additionally, since noise is insignificant, this method is excellent as an image recording process.

Conventionally, in the production of a planographic printing plate, a method is used wherein a so-called PS plate, in which an oleophilic photosensitive resin layer is formed on a hydrophilic support, is used to expose the photosensitive resin layer image-wise, the solubility of an exposed portion in an alkali developing solution is then improved or reduced to form an image, and a non-image area is dissolved and removed. However, recently, digitalized technologies where image information is electronically treated, accumulated, and output using computers have widely spread, and thus there is a demand for a novel image output process compatible with the technology. Particularly, a method capable of preparing a printing plate without treatment using a developing solution is under consideration to directly produce a planographic printing plate using an ink composition for inkjet recording. In the method, preferably, ink is image-wise discharged onto a surface of a hydrophilic support using an inkjet process, an active radiation ray is radiated thereon, and the support is cured, thereby obtaining a printing plate having a desired image (preferably, a hydrophobic image).

As such, many methods for preparing a planographic printing plate, wherein an oil sensitive image is formed through an inkjet process using a water-based ink containing an oleophilic component or an oil-based ink have been disclosed (for example, see Japanese Patent Application Laid-Open (JP-A) Nos. 7-304278, 8-324145, and 9-024599). Of these methods, a method for preparing a plate is attracting attention, in which an oil-based ink comprising a reactive diluent and an initiator for photopolymerization as curable components, a solvent, and a dye are applied to a support for a printing plate using an inkjet process to form an image, and light is radiated thereon to cure the image portion (for example, see Japanese Patent No. 2542500). The methods according to these documents have in common the fact that an ink which is present in a liquid state at room temperature is used, which leads to occurrence of the problem that resolution is reduced due to the spread of the ink.

A support applied to a planographic printing plate is used as the recording medium onto which the ink is discharged. The surface of the support for the planographic printing plate is uneven, and subjected to various treatments such as anodization and hydrophilization, so as to assure good hydrophilic and moisture retaining properties. Accordingly, in order to form a desired image with no ink spread on the surface of the support using the inkjet process directly, it is necessary to use an ink composition having very high surface tension. Since the surface of an image area (hydrophobic area) that is formed using the ink composition has a poor affinity for ink that is an oil component due to high surface tension, the ink is insufficiently transferred during the printing, and thus it is impossible to obtain good prints.

In order to overcome the disadvantages of the ink that is present in a liquid state at room temperature, a method for preparing a plate has been disclosed, in which a hydrophobic material that is present in a solid state at room temperature is melted by means of a heating head so as to be used as an ink composition so that an image area is formed on a support using a melt inkjet process (for example, see JP-A No. 9-58144). Since the melted ink is cooled and solidified at a point of time when the ink is discharged on the plate, there is an advantage that a problem regarding the spread can be overcome in comparison with the case where a water-based or oil-based ink liquid is used, and thus this method is under consideration. However, in the case of a hydrophobic material that is capable of being melted by heating, hardness is insufficient at room temperature even after solidification, and thus the printing durability of the printing plate is reduced. Accordingly, in order to improve the printing durability of the ink that is present in a solid state at room temperature, a technique of further including a composition capable of being polymerized by light or electronic rays in the ink in a greater amount has been proposed (for example, see JP-A No. 9-29926). According to this method, even though the strength of an image area is improved, the size of a device for polymerization using electronic rays that is used in curing is increased, and thus high energy is needed. Accordingly, the advantage of application of the simple inkjet process to the production of the plate becomes insignificant.

As described above, even though various types of inkjet inks have been used, a planographic printing plate that has no spread on a discharged image, high definition, and desired printing durability has not yet been achieved using an inkjet process.

### SUMMARY OF THE INVENTION

Under these circumstances, the invention has been made to provide an inkjet ink composition that is preferably used to produce a planographic printing plate using an inkjet process and that, with respect to an image area, can simultaneously realize (1) a discharge image and a printing image having high definition, (2) improved inking property and printing durability, and (3) reduction in a thermal melting temperature during the fixing; and a method for preparing the inkjet ink composition.

A first aspect of the invention is an ink composition for inkjet recording comprising a dispersion medium, a colorant, and a lipophilic substance, wherein the ratio of the content of the colorant to the content of the lipophilic substance is from 1/2 to 1/24.

A second aspect of the invention is the ink composition for inkjet recording of the first aspect, further comprising a component soluble in the dispersion medium, and the ratio of the content of both of the colorant and the lipophilic substance to the content of the component soluble in the dispersion medium is from 1/0.1 to 1/1.

A third aspect of the invention is the ink composition for inkjet recording of the first or second aspect, wherein the lipophilic substance is at least one selected from polymers having a mass average molecular weight in a range of from 2,000 to 1,000,000 and a polydispersity (mass average molecular weight/number average molecular weight) in a range of from 1.0 to 5.0.

A fourth aspect of the invention is the ink composition for inkjet recording of the first or second aspect, wherein the lipophilic substance is at least one selected from polymers containing at least any one of constituent units represented by the following Formulae (1) to (4): 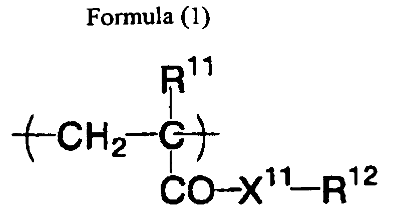 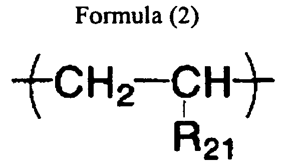 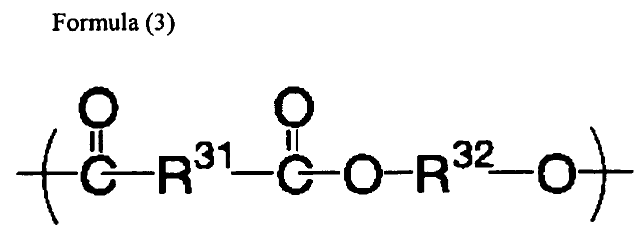 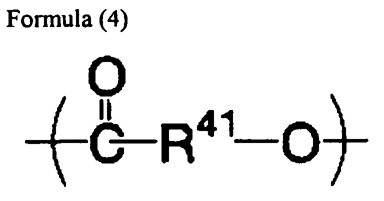 wherein X¹¹ represents an oxygen atom or -N(R¹³)-, R¹¹ represents a hydrogen atom or a methyl group, R¹² represents a hydrocarbon group having 1 to 30 carbon atoms, R¹³ represents a hydrogen atom or a hydrocarbon group having 1 to 30 carbon atoms, R²¹ represents a hydrogen atom or a hydrocarbon group having 1 to 20 carbon atoms, R³¹, R³², and R⁴¹ each represent a divalent hydrocarbon group having 1 to 20 carbon atoms, and R¹², R²¹, R³¹, R³², and R⁴¹ may respectively contain an ether bond, an amino group, a hydroxyl group, or a halogen substituent in the hydrocarbon group.

A fifth aspect of the invention is the ink composition for inkjet recording of the second aspect, wherein the component soluble in the dispersion medium is at least one selected from polymers having a mass average molecular weight in a range of from 1,000 to 1,000,000 and a polydispersity (mass average molecular weight/number average molecular weight) in a range of from 1.0 to 7.0.

A sixth aspect of the invention is the ink composition for inkjet recording of the second aspect, wherein the component soluble in the dispersion medium is at least one selected from graft polymers that contain at least a polymer component including at least any one of constituent units represented by the following Formulae (5) and (6) and a polymer component containing at least a constituent unit represented by the following Formula (7) as a graft chain: 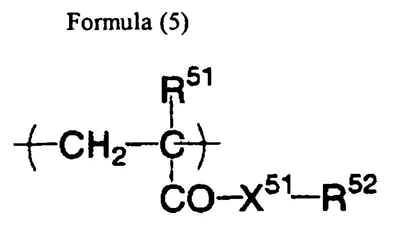 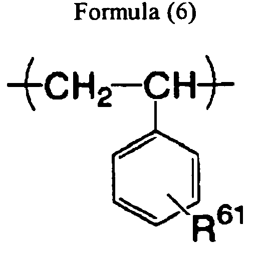 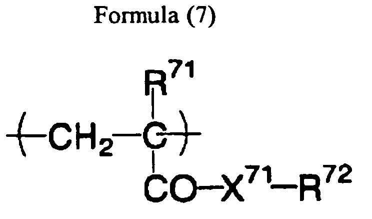 wherein X⁵¹ represents an oxygen atom or -N(R⁵³)-, R⁵¹ represents a hydrogen atom or a methyl group, R⁵² represents a hydrocarbon group having 1 to 10 carbon atoms, R⁵³ represents a hydrogen atom or a hydrocarbon group having 1 to 10 carbon atoms, R⁶¹ represents a hydrogen atom, a hydrocarbon group having 1 to 20 carbon atoms, a halogen atom, a hydroxyl group, or an alkoxy group having 1 to 20 carbon atoms, X⁷¹ represents an oxygen atom or -N(R⁷³)-, R⁷¹ represents a hydrogen atom or a methyl group, R⁷² represents a hydrocarbon group having 4 to 30 carbon atoms, R⁷³ represents a hydrogen atom or a hydrocarbon group having 1 to 30 carbon atoms, and R⁵², R⁶¹, and R⁷² may respectively contain an ether bond, an amino group, a hydroxyl group, or a halogen substituent in the hydrocarbon group.

A seventh aspect of the invention is a method for preparing a planographic printing plate, comprising applying the ink composition for inkjet recording according to any one of the first to sixth aspects onto a hydrophilic support using an inkjet recording process to form an ink image, and curing the ink image.

An eighth aspect of the invention is a method for preparing an ink composition, comprising sequentially melt-kneading a colorant and a lipophilic substance to obtain a melt-kneaded substance of a polymer containing the colorant, crushing the melt-kneaded substance, and wet dispersing ground particles containing the colorant and the lipophilic substance in a dispersion medium.

A ninth aspect of the invention is the method of the eighth aspect, wherein the colorant and the lipophilic substance are added to a mixed solution containing the dispersion medium and a component soluble in the dispersion medium so as to be dispersed.

A tenth aspect of the invention is the method of the eighth or ninth aspect, wherein the melt-kneading is conducted at a temperature of from 50 to 200°C for from 30 minutes to 6 hours.

An eleventh aspect of the invention is the method of the eighth or ninth aspect, wherein the crushing is conducted in a two-step process comprising coarse crushing and subsequent fine crushing.

A twelfth aspect of the invention is the method of the eighth or ninth aspect, wherein the wet dispersing is conducted in a hermetically sealed environment.

A thirteenth aspect of the invention is a method for preparing a planographic printing plate, comprising applying the ink composition prepared according to the method disclosed in any one of the eighth to twelfth aspects onto a hydrophilic support using an inkjet recording process to form an ink image, and curing the ink image.

### BRIEF DESCRIPTION OF DRAWINGS

Fig. 1 is a side view showing a concept of a brush reining process that is employed for mechanical roughing treatment in the production of a support for a planographic printing plate using the ink composition of the invention;
Fig. 2 is a graph showing an exemplary embodiment of an alternating wave-type current wave pattern that is employed for electrochemical roughing treatment in the production of the support for the planographic printing plate using the ink composition of the invention;
Fig. 3 is a side view showing an exemplary embodiment of a radial-type cell of the electrochemical roughing treatment using an alternating current in the production of the support for the planographic printing plate using the ink composition of the invention; and
Fig. 4 is a view showing an anodizing device that is employed for anodizing treatment in the production of the support for the planographic printing plate using the ink composition of the invention.

### DETAILED DESCRIPTION OF THE PREFERRED EMBODIMENTS

An ink composition according to an aspect of the invention is an ink composition for inkjet recording that comprises a dispersion medium, a colorant, and a lipophilic substance. The weight ratio of the colorant to the lipophilic substance is from 1/2 to 1/24, that is, the ratio of the content of the colorant to the content of the lipophilic substance is from 0.042 to 0.5.

An ink composition according to the other aspect of the invention is an ink composition for inkjet recording that comprises a dispersion medium, a colorant, a lipophilic substance, and a component soluble in the dispersion medium. The weight ratio of the colorant and the lipophilic substance to the component soluble in the dispersion medium is from 1/0.1 to 1/1, that is, the ratio of the content of both of the colorant and the lipophilic substance to the content of the component soluble in the dispersion medium is from 1 to 10.

Other components in the ink composition according to the aspect of the invention are not particularly limited except that the ratio of the colorant to the lipophilic substance, or the ratio of the content of both of the colorant and the lipophilic substance to the content of the component soluble in the dispersion medium is controlled to the above-mentioned range. The components used in the ink composition may be selected and used depending on the purposes.

### (Lipophilic substance)

The ink composition according to the aspect of the invention is preferably used to produce an image of a planographic printing plate. Thus, it is preferable that the image formed on a recording medium such as a hydrophilic support include a polymer which is a lipophilic substance as a main component.

A polymer solution or a polymer that is capable of being melted by heating may be used in the ink composition, but the discharging property is easily reduced due to the increased viscosity of the ink. Accordingly, in an embodiment in which the ink composition comprises a polymer, it is preferable that the polymer has a particle shape and is used as a dispersion solution having the polymer dissolved in water or an organic solvent. Other preferred embodiments include an embodiment wherein monomers or oligomers are polymerized by a radioactive ray or heat after discharging to form polymers.

The ink composition that is preferably used in the invention is a lipophilic substance, and examples of the ink composition include an organic solvent dispersion solution including polymer particles produced using a wet dispersion method as a main component, or an aqueous dispersion solution including the polymer particles as the main component.

The lipophilic substance used in the ink composition according to the aspect of the invention is not particularly limited, and polymer compounds that are typically used in the ink composition may be appropriately selected.

Examples of the lipophilic substance used in the invention include rosins, a rosin modified phenol resin, an alkyd resin, a (meth)acryl-based polymer, polyurethane, polyester, polyamide, polyethylene, polybutadiene, polystyrene, polyvinyl acetate, modified acetal of polyvinyl alcohol, and polycarbonate. Of the substances, in consideration of ease of the formation of particles, the polymer having a mass average molecular weight in a range of from 2,000 to 1,000,000 and a polydispersity (mass average molecular weight/number average molecular weight) in a range of from 1.0 to 5.0 is preferable. Additionally, in view of ease of the fixing, the polymer in which any one of a softening point, a glass transition point, and a melting point is from 40 to 120°C is preferable.

The polymer that is preferably used as the lipophilic substance in the invention includes at least any one of constituent units represented by the following Formulae (1) to (4).

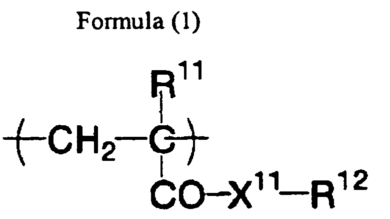

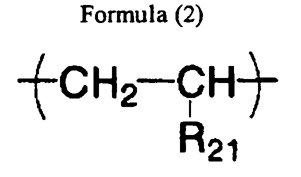

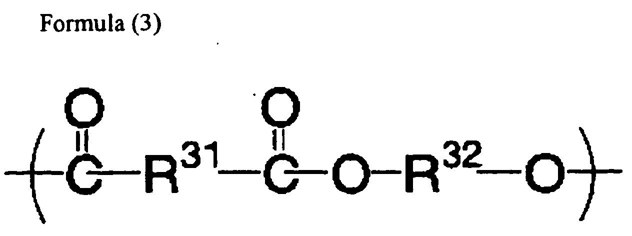

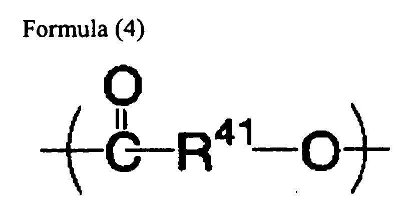

In the Formulae, X¹¹ represents an oxygen atom or -N(R¹³)-. R¹¹ represents a hydrogen atom or a methyl group, R¹² represents a hydrocarbon group having 1 to 30 carbon atoms, and R¹³ represents a hydrogen atom or a hydrocarbon group having 1 to 30 carbon atoms. R²¹ represents a hydrogen atom or a hydrocarbon group having 1 to 20 carbon atoms. R³¹, R³², and R⁴¹ each represent a divalent hydrocarbon group having 1 to 20 carbon atoms. Meanwhile, R¹², R²¹, R³¹, R³², and R⁴¹ may respectively contain an ether bond, an amino group, a hydroxyl group, or a halogen substituent in a hydrocarbon group.

The polymer containing the constituent unit represented by Formula (1) is obtained by radical polymerization of the corresponding radical polymerizable monomers using a known method. Examples of the radical polymerizable monomer include (meth)acrylic ester such as methyl (meth)acrylate, ethyl (meth)acrylate, propyl (meth)acrylate, butyl (meth)acrylate, hexyl (meth)acrylate, octyl (meth)acrylate, 2-ethylhexyl (meth)acrylate, dodecyl (meth)acrylate, stearyl (meth)acrylate, cyclohexyl (meth)acrylate, phenyl (meth)acrylate, benzyl (meth)acrylate, and 2-hydroxyethyl (meth)acrylate, and (meth)acrylamides such as N-methyl (meth)acrylamide, N-propyl (meth)acrylamide, N-phenyl (meth)acrylamide, and N,N-dimethyl (meth)acrylamide.

The polymer containing the constituent unit represented by Formula (2) is obtained by radical polymerization of the corresponding radical polymerizable monomers using a known method. Examples of the radical polymerizable monomer include ethylene, propylene, butadiene, styrene, and 4-methyl styrene.

The polymer containing the constituent unit represented by Formula (3) is obtained by the polycondensation of the corresponding dicarboxylic acid or anhydride thereof and diols using a known method. Examples of the dicarboxylic acid include a succinic acid, an adipic acid, a sebacic acid, an isophthalic acid, a terephthalic acid, 1,4-phenylene diacetic acid, and a diglycolic acid and hydrides of these acids. Examples of diol include ethylene glycol, 1,2-propanediol, 1,3-propanediol, 1,4-butanediol, 1,6-hexanediol, 1,10-decanediol, 2-butene-1,4-diol, 1,4-cyclohexanediol, 1,4-cyclohexanedimethanol, 1,4-benzenedimethanol, and diethylene glycol.

The polymer containing the constituent unit represented by Formula (4) is obtained by the polycondensation of the corresponding carboxylic acid having a hydroxyl group according to a known method, or by ring-opening polymerization of the corresponding cyclic ester of the carboxylic acid having a hydroxyl group according to a known method. Examples of the carboxylic acid having a hydroxyl group or cyclic ester thereof include a 6-hydroxyhexanoic acid, a 11-hydroxyundecanoic acid, a hydroxybenzoic acid, and ε-caprolactone.

The polymer that includes at least any one of the constituent units represented by Formulae (1) to (4) may be a homopolymer of the constituent unit represented by Formulae (1) to (4), or a copolymer of the constituent unit and the other constituent components. Additionally, the polymer that is a lipophilic substance may be used alone or in a combination of two or more. It is preferable to use a copolymer of the constituent units represented by Formulae (1) and (2).

The amount of the lipophilic substance contained in the ink composition is preferably in a range of 0.1 to 30% by mass, and more preferably in a range of 1 to 20% by mass with respect to the solid content of the ink composition.

### (Colorant)

It is desirable that the ink composition comprises an lipophilic polymer or a precursor thereof and a dispersion medium. Since an image consisting only of the polymer is colorless or white, it is difficult to determine whether the quality of image is desirable or not. Thus, there is a problem of reduced plate inspection property. Additionally, in order to firmly fix the image to the medium, a process of heating the entire image to melt polymer particles constituting the image and thus fix the particles onto the recording medium is repeated several times. Since transparency of the image is improved due to the thermal melting treatment, the plate inspection is more difficult.

To improve the plate inspection property, it is necessary for the ink composition to comprise the colorant, and particularly, it is preferable that the colorant is uniformly dispersed into the polymer particles of the ink composition dispersion solution.

Various pigments and dyes that are typically used in the ink composition may be appropriately selected to be used as the colorant used in the ink composition according to the aspect of the invention.

The colorant used in the invention may be known dyes and pigments, and selected depending on the use or purpose.

Examples of a yellow pigment include a mono-azo pigment such as C.I. pigment yellow 1 and C.I. pigment yellow 74, a disazo pigment such as C.I. pigment yellow 12 and C.I. pigment yellow 17, a non-benzidine-based azo pigment such as C.I. pigment yellow 180, an azo lake pigment such as C.I. pigment yellow 100, a condensation azo pigment such as C.I. pigment yellow 95, an acid dye lake pigment such as C.I. pigment yellow 115, a base dye lake pigment such as C.I. pigment yellow 18, an anthraquinone-based pigment such as Flavanthrone yellow, an isoindolinone pigment such as Isoindolinone yellow 3RLT, a quinophthalone pigment such as Quinophthalone yellow, an isoindoline pigment such as Isoindoline yellow, a nitroso pigment such as C.I. pigment yellow 153, a metal complex azomethine pigment such as C.I. pigment yellow 117, and an isoindolinone pigment such as C.I. pigment yellow 139.

Examples of a magenta pigment include a monoazo-based pigment such as C.I. pigment red 3, a disazo pigment such as C.I. pigment red 38, an azo lake pigment such as C.I. pigment red 53:1 and C.I. pigment red 57:1, a condensation azo pigment such as C.I. pigment red 144, an acid dye lake pigment such as C.I. pigment red 174, a base dye lake pigment such as C.I. pigment red 81, an anthraquinone-based pigment such as C.I. pigment red 177, a thioindigo pigment such as C.I. pigment red 88, a perinone pigment such as C.I. pigment red 194, a perylene pigment such as C.I. pigment red 149, a quinacridone pigment such as C.I. pigment red 122, an isoindolinone pigment such as C.I. pigment red 180, and an alizarin lake pigment such as C.I. pigment red 83.

Examples of a cyan pigment include a disazo-based pigment such as C.I. pigment blue 25, a phthalocyanine pigment such as C.I. pigment blue 15, an acid dye lake pigment such as C.I. pigment blue 24, a base dye lake pigment such as C.I. pigment blue 1, an anthraquinone-based pigment such as C.I. pigment blue 60, and an alkali blue pigment such as C.I. pigment blue 18. Examples of a pigment for black ink include an organic pigment such as aniline black-based pigment, an iron oxide pigment, and a carbon black pigment such as furnace black, lamp black, acetylene black, and channel black. A processed pigment that is represented by a microlith pigment such as microlith-A, microlith-K, and microlith-T may be used. Specific examples of the pigment include microlith yellow 4G-A, microlith red BP-K, microlith blue 4G-T, and microlith black C-T.

Various types of the pigments may be used according to a need, for example, a calcium carbonate or titanium oxide pigment is used as a white pigment, aluminum powder is used for silver ink, and a copper alloy is used for gold ink.

Various types of commercially available carbon blacks may be used as a black pigment.

Among the pigments, in views of ease of dispersion with respect to the dispersion medium or the plate inspection property, the blue pigment or black pigment is preferable.

The plate inspection property is improved as the content of colorant increases. However, if the content is excessively high, thermal melting property of the polymer particles is reduced during the hot fixing, causing an increase in the fixing temperature. In connection with this, even though the fixing temperature is increased to desirably conduct thermal melting, inking property of the printing ink is reduced or strength of the image is reduced due to physical properties of the colorant. Thus, insufficient printing durability may be obtained.

In this point of view, it is necessary for the content of the colorant to be in a predetermined range with respect to the main component constituting the image. According to the review of the present inventors, a ratio of the colorant to the polymer (lipophilic substance) is required to be in a range of from 1/2 to 1/24, and preferably from 1/3 to 1/16. In the range, the plate inspection property, strength of the image, and the fixing property can be made compatible.

### (Component soluble in the dispersion medium)

In the ink composition, it is preferable that the colorant or the polymer (lipophilic substance) is dispersed in the dispersion medium in a particulate state and that a dispersant dissolved in the dispersion medium is contained so as to produce a stable dispersion solution. That is, the dispersant is added to form the colorant or the polymer in a particulate state and to assure the dispersion stability of the particulates.

Examples of the dispersant that is capable of being used in the ink composition and dissolved in the dispersion medium include a surfactant that is represented by sorbitan aliphatic ester such as sorbitan monooleate or polyethylene glycol aliphatic ester such as polyoxyethylene distearate. Examples thereof also include a copolymer of styrene and a maleic acid, modified amine thereof, a copolymer of styrene and (meth)acryl compound, a (meth)acryl-based polymer, a copolymer of polyethylene and the (meth)acryl compound, rosin, BYK-160, 162, 164, and 182 (polyurethane-based polymers manufactured by BYK-Chemie GmbH), EFKA-401 and 402 (acryl-based polymers manufactured by EFKA Chemicals), and Solsperse 17000 and 24000 (polyester-based polymers manufactured by Zeneca Co., Ltd.). In view of the storage stability of the ink composition for a long time, it is preferable that the polymer have a mass average molecular weight in a range of from 1,000 to 1,000,000 and a polydispersity (mass average molecular weight/number average molecular weight) in a range of from 1.0 to 7.0. Most preferably, a graft polymer or a block polymer is used.

The polymer used in the invention is the graft polymer that contains at least a polymer component including at least any one of constituent units represented by the following Formulae (5) and (6) and a polymer component including at least a constituent unit represented by the following Formula (7) as a graft chain: 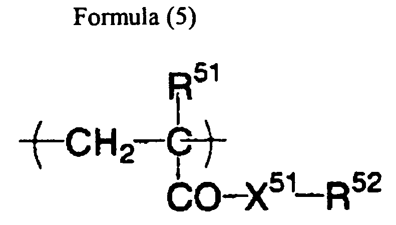 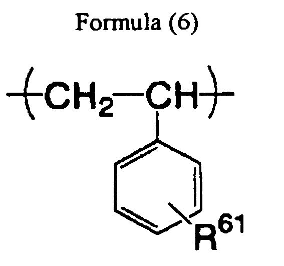 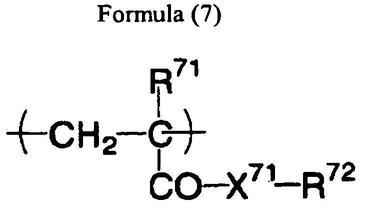 wherein X⁵¹ represents an oxygen atom or -N(R⁵³)-. R⁵¹ represents a hydrogen atom or a methyl group, R⁵² represents a hydrocarbon group having 1 to 10 carbon atoms, and R⁵³ represents a hydrogen atom or a hydrocarbon group having 1 to 10 carbon atoms. R⁶¹ represents a hydrogen atom, a hydrocarbon group having 1 to 20 carbon atoms, a halogen atom, a hydroxyl group, or an alkoxy group having 1 to 20 carbon atoms. X⁷¹ represents an oxygen atom or -N(R⁷³)-. R⁷¹ represents a hydrogen atom or a methyl group, R⁷² represents a hydrocarbon group having 4 to 30 carbon atoms, and R⁷³ represents a hydrogen atom or a hydrocarbon group having 1 to 30 carbon atoms. R⁵², R⁶¹, and R⁷² may respectively contain an ether bond, an amino group, a hydroxyl group, or a halogen substituent in a hydrocarbon group.

The graft polymer may be obtained by polymerizing radical polymerizable monomers corresponding to Formula (7) in the presence of a chain transfer agent, by introducing a polymerizable functional group into an end of the polymer obtained, and further, by copolymerizing the resulting polymer with radical polymerizable monomers corresponding to Formula (5) or (6).

Examples of the radical polymerizable monomer corresponding to Formula (5) include (meth)acrylates such as methyl (meth)acrylate, ethyl (meth)acrylate, propyl (meth)acrylate, butyl (meth)acrylate, hexyl (meth)acrylate, cyclohexyl (meth)acrylate, phenyl (meth)acrylate, benzyl (meth)acrylate, and 2-hydroxyethyl (meth)acrylate, and (meth)acrylamides such as N-methyl(meth)acrylamide, N-propyl(meth)acrylamide, N-phenyl(meth)acrylamide, and N,N-dimethyl(meth)acrylamide.

Examples of the radical polymerizable monomer corresponding to Formula (6) include styrene, 4-methylstyrene, chlorostyrene, and methoxystyrene.

Examples of the radical polymerizable monomer corresponding to Formula (7) include hexyl (meth)acrylate, octyl (meth)acrylate, 2-ethylhexyl (meth)acrylate, dodecyl (meth)acrylate, and stearyl (meth)acrylate.

Specific examples of the graft polymers include polymers represented by the following Structure.

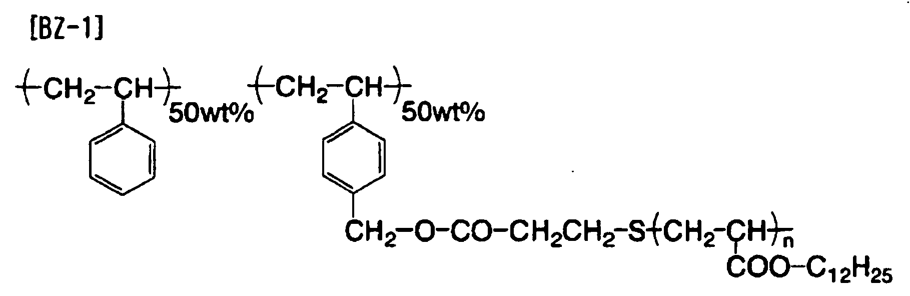

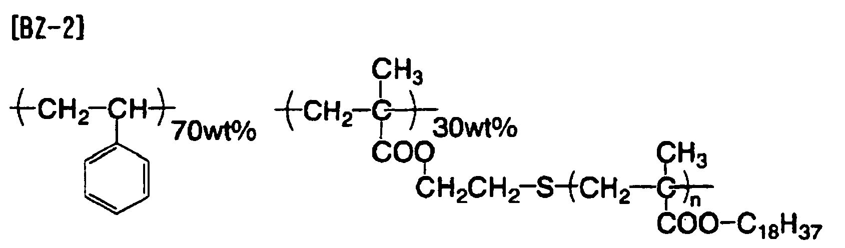

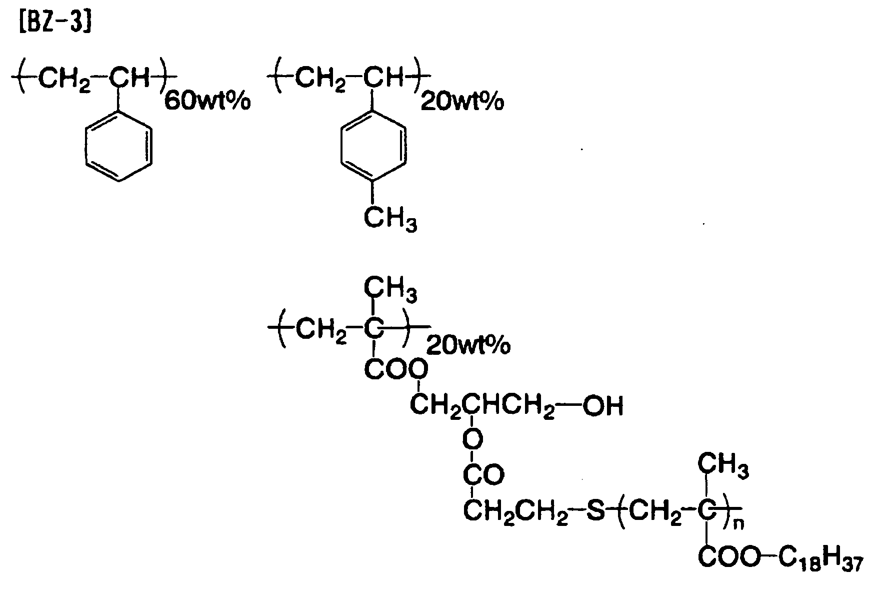

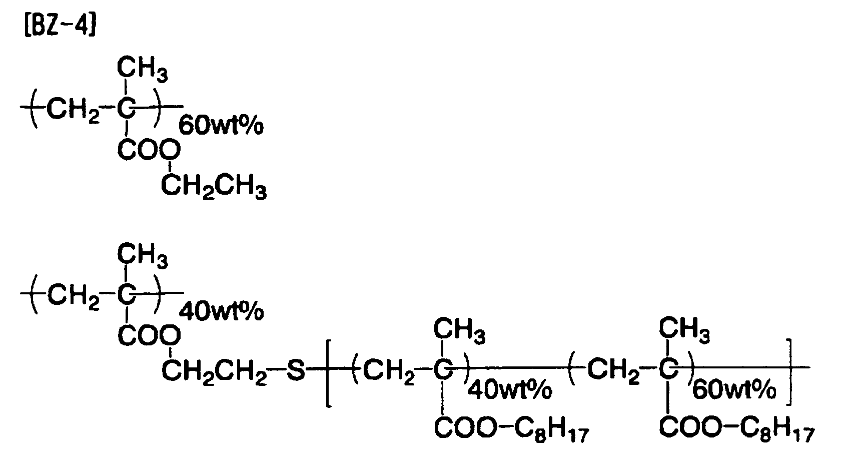

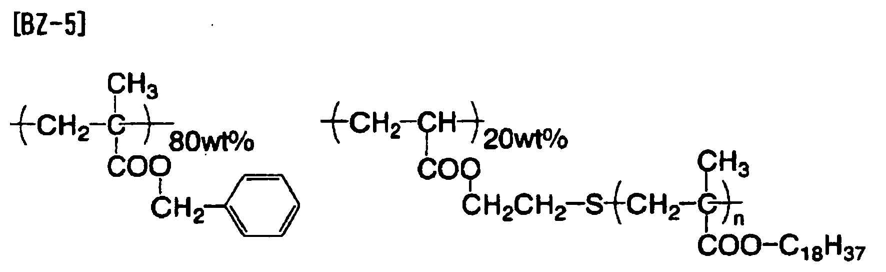

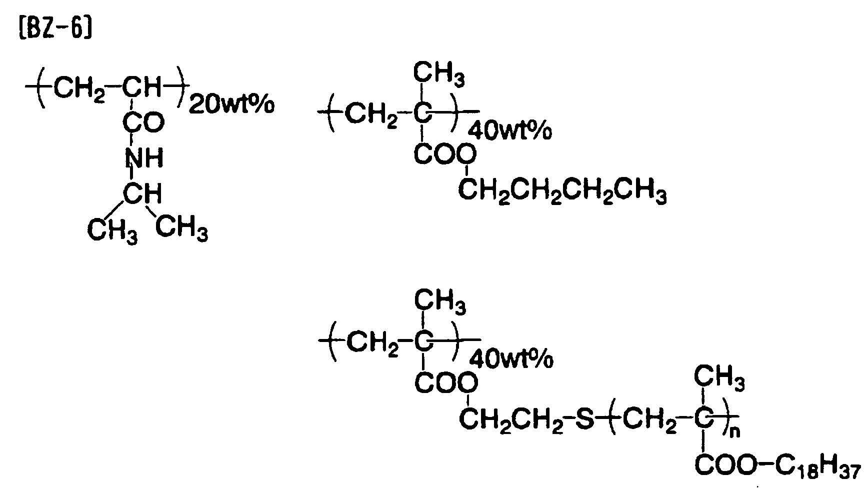

Among the graft polymers, the graft polymer that contains the polymer component containing at least any one of the constituent units represented by Formulae (5) and (6) and the polymer component containing at least the constituent unit represented by Formula (7) as the graft chain is preferable.

The dispersant may be added to suppress clogging of a head or an ink cartridge caused by the presence of particle agglomerates and to stabilize the component particulates, thereby forming the image having the high quality on the printing plate. However, it is known that the excessively high content of the dispersant affects physical properties of ink liquid, spreading out a dot image of the printing. Accordingly, the ratio of the content of both of the colorant and the lipophilic substance to the content of the soluble component is from 1/0.1 to 1/1, and preferably from 1/0.2 to 1/0.8 in the invention.

### (Dispersion medium)

Solvents such as a non-aqueous system, a polar organic solvent system, and a mixed solvent system of the polar organic solvent and water may be used as the dispersion medium used in the ink composition according to the aspect of the invention. Examples of the non-aqueous-based solvent include straight chained or branched aliphatic hydrocarbons, alicyclic hydrocarbons, aromatic hydrocarbons, halogen substituents of these hydrocarbons, and silicone oil. For example, hexane, heptane, octane, iso-octane, decane, iso-decane, decalin, nonane, dodecane, iso-dodecane, cyclohexane, cyclooctane, cyclodecane, toluene, xylene, mesitylene, Isopar C, Isopar E, Isopar G, Isopar H, Isopar L, Isopar M, and Isopar P (Isopar: trade name from the Exxon Chemical Corp.), Shellsol 70 and Shellsol 71 (Shellsol: trade name from Shell Oil Company), Amsco OMS and Amsco 460 solvents (Amsco: trade name from Spirits Company), and KF - 96 L (trade name from Shin-Etsu Chemical Co., Ltd.) may be used alone or in the form of mixtures thereof.

Examples of the polar organic solvent or the mixed system of the aqueous system and the polar organic solvent include alcohol, ketone, and water. As to alcohol, examples of monohydric alcohol having 1 to 8 carbon atoms include methanol, ethanol, propanol, and butanol. Examples of polyhydric alcohol having 1 to 8 carbon atoms include ethylene glycol, propylene glycol, glycerine, and cellosolve. Additionally, examples of polyhydric alcohol ester include ethylene glycol monoalkylether acetate, diethylene glycol monoalkyl ether acetate, and triethylene glycol monoalkyl ether acetate.

Among the solvents, the non-aqueous solvent is preferable. The dispersion medium content may be appropriately selected depending on the ink composition, and is typically 30 to 99% by mass.

The ink composition using the above-mentioned method may be applied to the production of the planographic printing plate that includes forming an ink image containing the colorant and the lipophilic substance on a hydrophilic support using an inkjet recording process and curing the ink image.

### (Method for preparing ink composition)

Hereinafter, a description will be given of a method for preparing the ink composition for inkjet recording according to the aspect of the invention that is useful for preparing the planographic printing plate using the inkjet recording process.

The method for preparing the ink composition according to the aspect of the invention includes sequentially melt-kneading the colorant and the lipophilic substance, crushing a melt-kneaded material, and wet dispersing ground particles containing the colorant and the lipophilic substance into a dispersion medium.

### (Sequential melt-kneading of colorant and lipophilic substance)

According to the aspect of the invention, first, a pigment as the colorant and the lipophilic substance (polymer) as a main component of the ink are ground, mixed, melted by heating, and uniformly kneaded to produce a kneaded polymer substance on which the colorant is uniformly applied.

Examples of other methods of uniformly applying the colorant on the polymer include a chemical method using an in-situ polymerization method, and a method using a phase separation process (coacervation).

Examples of the in-situ polymerization method include a method in which a system of a pigment and a polymer is dispersed and then subjected to suspension polymerization, a method in which a pigment is dispersed in an aqueous system in the presence of a dispersant and a polar polymer, a vinyl-based polymer, and a multifunctional cross-linking polymer are added to the system to conduct polymerization, and a method in which monomers where a pigment is dispersed are polymerized to form agglomerates and then subjected to suspension polymerization or emulsion polymerization so as to achieve desirable adsorption onto the pigment.

In the phase separation method (coacervation), after a pigment is dispersed in a polymer solution, solubility of the polymer is reduced using a predetermined method, and the polymer is precipitated from a solution system onto pigment particles. This method is characterized in that the polymer may be selected from a wider range in comparison with the chemical method (in-situ polymerization method). A method in which a non-solvent is added to a resin solution where a pigment is dispersed to precipitate the resin on a surface of the pigment, or a method in which, after a pigment is finely dispersed in a water-soluble polymer or a water-soluble resin solution, pH is controlled to precipitate the mixture on the surface of the pigment is applied to extensive fields including rosin treatment. After the pigment is dispersed in an acidic solution of a nitrogen-containing acryl resin that is soluble in an acid, pH is increased to insolubilize the polymer on the surface of the pigment, thereby preventing agglomeration in paints and printing ink and improving fluidity, brilliance, and tinting strength.

However, as to the in-situ polymerization method or the phase separation method (coacervation), if the amount of the colorant is small with respect to the polymer, it is difficult to uniformly disperse the colorant particles in the polymer. In connection with this, in a hot melt-kneading method, it is possible to uniformly disperse the colorant particles in the polymer with no respect to a ratio of the polymer to the colorant particles. In detail, the colorant and the polymer are mixed and then kneaded using a kneader, a three-roll mill, or a Banbury Mixer while the colorant and the polymer are heated. After a hydrous paste (wet cake) of the colorant is kneaded along with the polymer or the polymer and the solvent, water is substituted by the polymer or the polymer solution, water and the solvent are dried under reduced pressure to produce a colored mixture (flushing treatment), and the hot melt-kneading is conducted.

The heating temperature is selected depending on the polymer used, and typically from 50 to 200°C. Additionally, from the viewpoint of uniform mixing of the colorant and the polymer, it is preferable that the kneading time is from 30 minutes to 6 hours.

### (Crushing of the melt-kneaded material)

The kneaded substance of the colorant resin obtained is ground. In order to obtain desired parts that are uniformly and finely ground, it is preferable to conduct the crushing through two-step process of the coarse crushing and the subsequent fine crushing. A roll mill, a cutter mill, and a hammer mill are typically used as a coarse crusher, and the colored mixture is ground using the crusher so as to have a size of from 0.5 to 1 mm.

Examples of a fine crusher include a high-speed rotation type, a ball mill type, a medium agitation type, and an airflow grinding type. Examples of the high-speed rotation type include a disk mill type, a pin mill type, a screw mill type, and a centrifugal classification mill type. Examples of the ball mill type include an electric type, a vibration type, and a planetary type, and examples of the medium agitation type include a top type, an agitator type, a pipe type, and an annular type. Examples of the airflow grinding type include an air drawing type, a nozzle drawing type, a collision body collision type, and an airflow collision type. In detail, Jet-O-miser or Single track Jet mill (FS-4) manufactured by SEISHIN ENTERPRISE Co., Ltd., a jet mill manufactured by Fuji-sangyo Co., Ltd. and a P-J-M type supersonic jet crusher manufactured by Nippon Pneumatic Mfg. Co., Ltd. may be used, and the colored mixture is ground using the fine crusher to have a size of from 5 to 300 µm.

It is preferable that the finely ground colored mixture be further classified. Examples of the classification include classification using a sieve, dry air classification, and a forced vortex type of dry air classification. Specific examples of the forced vortex type of dry air classifier include a spedic classifier (trade name: SPC-250, manufactured by SEISHIN ENTERPRISE Co., Ltd.), and it is preferable to conduct the classification using the classifier to assure a size of from10 to 100 µm. By such fine crushing to the size, uniform particles may be obtained for a short time in the subsequent wet dispersion process. Meanwhile, if there are present coarse and large particles due to the undesirable crushing, the coarse and large particles remain in the undispersed state, thereby a broad distribution of the particle size and long dispersion time are obtained.

### (Wet dispersion of the ground particles containing the colorant and the lipophilic substance in the dispersion medium)

In the dispersion process, the particles including the colorant and the lipophilic substance are added to a mixed solution of the dispersion medium and the dispersant to conduct the distribution. The above-mentioned substances are used as the dispersion medium and the dispersant, and the addition amount is set to a preferred range of the invention.

A distributor used in the dispersion process is not particularly limited, and a commercially available wet distributor may be used. Examples of the distributor include a ball mill, a sand mill, and an attritor, and a hermetic type is typically used in order to prevent a solvent from being vaporized. Examples of the sand mill include a vertical type and a horizontal type, and a shaft having a disk or a pin is rotated at a peripheral speed of 3 to 15 m/s to conduct the dispersion. The dispersion may be conducted so that a plurality of continuous-type sand mills is arranged in series and the diameter of the media is changed depending on dispersity, thereby efficiently producing the ink composition. If the particles having the large particle diameter are dispersed using the continuous-type sand mill, the predispersion is needed. In this case, a disperser, a ball mill, or a batch-type sand mill is used as a predisperser.

Specific examples of the horizontal-type sand mill include a dyno-mill, Dyno-mill ECM (Switzerland, manufactured by WAB Co.), a pearl mill, DCP (Germany, manufactured by DRAISWERKE Company), an agitator mill (Germany, manufactured by Netsche Company), a super mill (Belgium, manufactured by Sussmeyer Company), a coball mill (Switzerland, manufactured by FRYMA Company), and a spike mill (manufactured by INOLTE MFG, INC).

Various materials such as zirconia, titania, alumina, glass, steel, and silicon nitride may be used as the media for the ball mill and the sand mill. In views of specific gravity and wear resistance of the media, the material of the media is selected depending on viscosity of dispersion solution and the degree of predispersion.

The diameter of the media is not particularly limited, but, for example, may be from 0.1 to 10 mm. Typically, the larger the media are, the broader a particle size distribution is. The the particles having a small diameter may be dispersed as the size of the media is reduced. Additionally, a charging rate of the media is not particularly limited, and preferably from 50 to 90%. The charging rate of the media is closely connected with the dispersion performance, and it is believed that dispersion efficiency is improved as the charging rate is increased. In the case of the horizontal type of mill, locking of the media does not occur during the operation in comparison with that of the vertical type. Thus, it is preferable that the charging rate is from 80 to 85% with respect to a Bessel capacity.

The dispersion may be conducted at a room temperature or conducted while heating is carried out at room temperature to 60°C. A volume average diameter of polymer particles containing the colorant in the dispersion medium that are obtained using the above-mentioned dispersion is 0.01 to 10 µm. More preferably, the volume average diameter is from 0.1 to 5 µm. Additionally, it is preferable that viscosity of the ink composition is from 1 to 30 mP·s at 20°C.

In the ink composition obtained from the above process, the colorant, the lipophilic substance, and the component that is soluble in the dispersion medium are in a predetermined range. Accordingly, contact characteristics to a recording medium, strength of an image, and resolution of the image are excellent. Thus, the ink composition may be applied to typical ink for inkjet recording, and may be used to form an image of a planographic printing plate on a hydrophilic support using an inkjet recording process.

The foregoing description of the embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### EXAMPLES

Hereinafter, the invention will be described in detail with reference to Examples and Comparative Examples, but this invention is not limited thereto.

### (Preparative Example)

As an example that uses an ink composition according to the aspect of this invention, the formation of a planographic printing plate using an inkjet process will be described.

### [Formation of a support]

### <Aluminum plate>

The following alloy was used to prepare a molten metal: an aluminum alloy containing 0.06% by mass of Si, 0.30% by mass of Fe, 0.005% by mass of Cu, 0.001% by mass of Mn, 0.001% by mass of Mg, 0.001% by mass of Zn, and 0.03% by mass of Ti, and Al and inevitable impurities as the balance. After the metal melting treatment followed by filtration, a DC casting method was used to produce an ingot having a thickness of 500 mm and a width of 1200 mm. The surface thereof was cut off by an average thickness of 10 mm by means of a surface cutter. Thereafter, the ingot was subjected to soaking treatment at 550°C for about 5 hours. When the temperature of the ingot was lowered to 400°C, a hot rolling machine was used to produce a rolled plate having a thickness of 2.7 mm. Furthermore, a continuous annealing machine was used to subject the plate to heat treatment at 500°C. Thereafter, the plate was cold-rolled to be finished into a thickness of 0.24 mm. In this way, an aluminum plate of JIS 1050 material was obtained. This aluminum plate was made into a width of 1030 mm, and then subjected to the following surface treatment.

### <Surface treatment>

Surface treatment was conducted by carrying out the following (a) to (j) treatments continuously. After each of the treatments and water washing, the solution or water used therein was cleared away by means of a nip roller.

### (a) Mechanical surface-roughening treatment

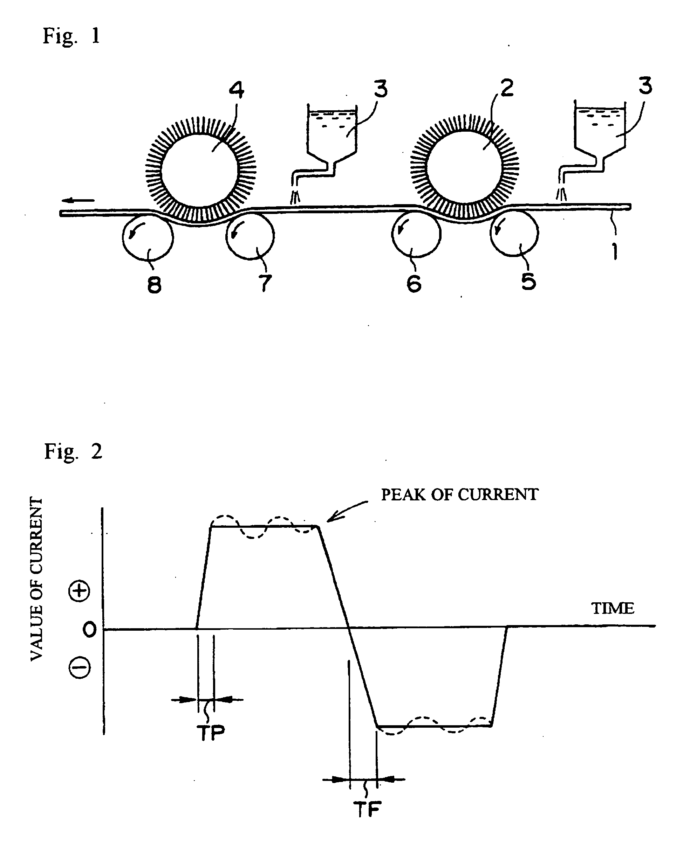

A machine shown in Fig. 1 was used to supply a suspension (specific gravity: 1.12) of an abrasive (pumice) in water, as an abrading slurry, onto a surface of the aluminum plate, and simultaneously the surface was subjected to mechanical surface-roughening treatment with rotating roller-form nylon brushes. In Fig. 1, reference number 1 represents the aluminum plate; 2 and 4, the roller-form brushes; 3, the abrading slurry; and 5, 6, 7 and 8, supporting rollers. The average grain diameter of the abrasive grains was 40 µm and the maximum grain diameter thereof was 100 µm. The material of the nylon brushes was 6,10-nylon, the bristle length thereof was 50 mm, and the bristle diameter thereof was 0.3 mm. The nylon brushes were each obtained by making holes in a stainless steel cylinder having a diameter of 300 mm and then planting bristles densely. The number of the used rotating brushes was three. The distance between the two supporting rollers (diameter 200 mm) under each of the brushes was 300 mm. Each of the brush rollers was pushed against the aluminum plate until the load of a driving motor for rotating the brush got 7 kW larger than the load before the brush roller was pushed against the aluminum plate. The rotating direction of the brush was the same as the moving direction of the aluminum plate. The rotating speed of the brush was 200 rpm.

### (b) Alkali etching treatment

An aqueous solution having a caustic soda concentration of 2.6% by mass, an aluminum ion concentration of 6.5% by mass and a temperature of 70°C was sprayed to etch the aluminum plate, thereby dissolving the aluminum plate by 6 g/m². Thereafter, the aluminum plate was washed with sprayed water.

### (c) Desmutting treatment

The aluminum plate was subjected to desmutting treatment with a 30°C aqueous solution having a nitric acid concentration of 1% by mass (and containing 0.5% by mass of aluminum ions), which was sprayed, and then washed with sprayed water. The aqueous nitric acid solution used in the desmutting treatment was waste liquid from the step of conducting electrochemical surface-roughening treatment using alternating current in an aqueous nitric acid solution.

### (d) Electrochemical surface-roughening treatment

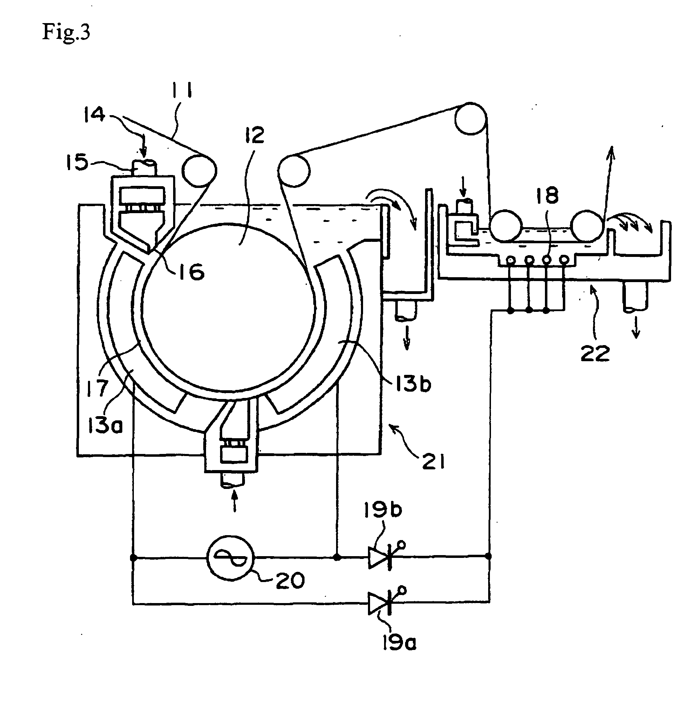

Alternating voltage having a frequency of 60 Hz was used to conduct electrochemical surface-roughening treatment continuously. The electrolyte used at this time was a 10.5 g/L solution of nitric acid in water (containing 5 g/L of aluminum ions and 0.007% by mass of ammonium ions), and the temperature thereof was 50°C. The waveform of the alternating current was a waveform was shown in Fig 2. The trapezoidal wave alternating current where the time TP until the current value was raised from zero to a peak was 0.8 msec, and the duty ratio of the current was 1:1 and also, the time TF until the current value was down from zero to a negative peak was 0.8 msec, and the duty ratio of the current was 1:1, as shown in Fig. 2, was used. A carbon electrode was used as a counter electrode to conduct the electrochemical surface-roughening treatment. Ferrite was used as an auxiliary anode. The electrolyte bath used was shown in Fig. 3. One or more alternating power sources can be connected to the electrolyte bath. In order to control the current ratio between the anode and the cathode of alternating current that flows into an aluminum plate opposite to a main electrode, to conduct uniform graining treatment, and to dissolve carbon of the main electrode, as shown in Fig. 3, an auxiliary anode 18 is preferably provided to cause a part of the alternating current to flow thereinto. In Fig. 3, reference number 11 represents the aluminum plate; 12, a radial drum roller; 13a and 13b, main electrodes; 14, an electrolyte; 15, an electrolyte supplying port; 16, a slit; 17, an electrolyte passage; 19a and 19b, thyristors; 20, an AC power source; 21, a main electrolytic bath, and 22, an auxiliary cathode bath. The density of the current was 30 A/dm² when the current was at the peak. The total of electricity quantities when the aluminum plate functioned as an anode was 220 C/dm². 5% of the current sent from a power source was caused to flow into the auxiliary anode. Thereafter, the aluminum plate was washed with sprayed water.

### (e) Alkali etching treatment

An aqueous solution having a caustic soda of 26% by mass and an aluminum ion concentration of 6.5% by mass was sprayed to etch the aluminum plate at 32°C so as to dissolve the aluminum plate by 0.25 g/m², thereby removing smut components made mainly of aluminum hydroxide and generated when the alternating current was used to conduct the electrochemical surface-roughening treatment in the previous step, and further dissolving edges of formed pits so as to be made smooth. Thereafter, the aluminum plate was washed with sprayed water.

### (f) Desmutting treatment

The aluminum plate was subjected to desmutting treatment with a 30°C aqueous solution having a nitric acid concentration of 15% by mass (and containing 4.5% by mass of aluminum ions), which was sprayed, and then washed with sprayed water. The aqueous nitric acid solution used in the desmutting treatment was waste liquid from the step of conducting the electrochemical surface-roughening treatment using the alternating current in the aqueous nitric acid solution.

### (g) Electrochemical surface-roughening treatment

Alternating voltage having a frequency of 60 Hz was used to conduct electrochemical surface-roughening treatment continuously. The electrolyte used at this time was a 7.5 g/L solution of hydrochloric acid in water (containing 5 g/L of aluminum ions), and the temperature thereof was 35°C. The waveform of the alternating current was a waveform shown in Fig. 2. The trapezoidal wave alternating current where the time TP until the current value was raised from zero to a peak was 0.8 msec, and the duty ratio of the current was 1:1, and also, where the time TF until the current value was down from zero to a negative peak was 0.8 msec, and the duty ratio of the current was 1:1 was used. A carbon electrode was used as a counter electrode to conduct the electrochemical surface-roughening treatment. Ferrite was used as an auxiliary anode. As the electrolyte bath used, a bath illustrated in Fig. 3 was used. The density of the current was 25 A/dm² when the current was at the peak. The total of electricity quantities when the aluminum plate functioned as an anode was 50 C/dm². Thereafter, the aluminum plate was washed with sprayed water.

### (h) Alkali etching treatment

An aqueous solution having a caustic soda of 26% by mass and an aluminum ion concentration 6.5% by mass was sprayed to etch the aluminum plate at 32°C so as to dissolve the aluminum plate by 0.10 g/m², thereby removing smut components made mainly of aluminum hydroxide and generated when the alternating current was used to conduct the electrochemical surface-roughening treatment in the previous step, and further dissolving edges of formed pits so as to be made smooth. Thereafter, the aluminum plate was washed with sprayed water.

### (i) Desmutting treatment

The aluminum plate was subjected to desmutting treatment with a 60°C aqueous solution having a nitric acid concentration of 25% by mass (and containing 0.5% by mass of aluminum ions), which was sprayed, and then washed with sprayed water.

### (j) Anodic oxidation treatment

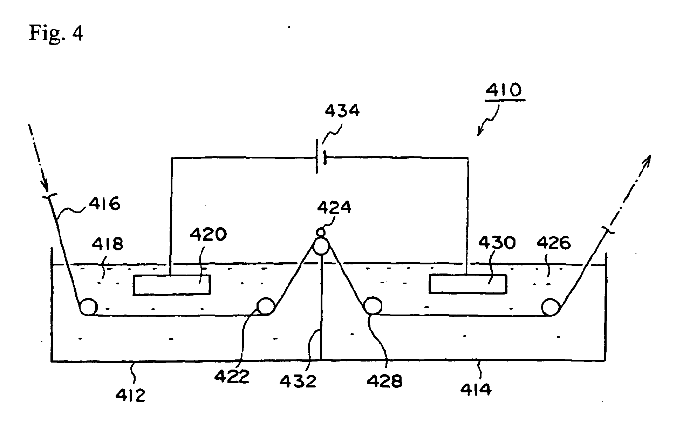

An anodic oxidation treatment device having a structure shown in Fig. 4 was used to conduct an anodic oxidation treatment, and then a support for a planographic printing plate is obtained. As shown in Fig. 4, in an anodic oxidation treatment device 410, an aluminum plate 416 was carried in an arrow direction as shown in Fig. 4. The aluminum plate 416 is positively charged by a power feeding electrode 420 in a power feeding bath 412 in which an electrolyte 418 is stored, as a first electrolyzing section. The aluminum plate 416 is carried upwards by a roller 422 in the power feeding bath 412, and then the direction along which the plate 416 is carried is converted downwards by a nip roller 424. Thereafter, the plate 416 is carried toward an electrolyzing treatment bath 414 in which an electrolyte 426 is stored, as a second electrolyzing section, and then the direction along which plate 416 is carried is converted into a horizontal direction by a roller 428. Next, the aluminum plate 416 is negatively charged by an electrolyzing electrode 430, thereby forming an anodic oxidation film on the surface thereof. The aluminum plate 416 fed out from the electrolyzing treatment bath 414 is carried for a subsequent step. In the anodic oxidation treatment device 410, the power feeding bath 412 and the electrolyzing treatment bath 414 are partitioned by one bath wall 432, and the roller 422, the nip roller 424 and the roller 428 constitute a direction converting unit. The rollers 422, 424, and 428 carry the aluminum plate 416 into a mountain form or a reverse U-shaped form in an inter-bath section between the power feeding bath 412 and the electrolyzing treatment bath 414. The power feeding electrode 420 and the electrolyzing electrode 430 are connected to a direct current power source 434. The electrolytes supplied into first and second electrolyzing sections were each sulfuric acid. The electrolytes were each an electrolyte having a sulfuric acid concentration of 170 g/L (and containing 0.5% by mass of aluminum ions), and the temperature thereof was 38°C. Thereafter, the support was washed with sprayed water. The final amount of the oxidation coated film was 2.7 g/m².

### (k) Alkali metal silicate treatment

The aluminum support formed by the anodic oxidation treatment was immersed into a treatment bath having a 30°C aqueous solution of 1 % by mass of a sodium silicate No. 3 for 10 seconds to conduct an alkali metal silicate treatment (silicate treatment). Thereafter, the aluminum support was washed with sprayed well water, and thus a support with the silicate hydrophilicized surface was obtained.

On the aluminum support obtained as mentioned above that was subjected to an alkali metal silicate treatment, a undercoat layer coating solution having the following composition was coated, and the aluminum support was dried at 80° for 15 seconds to form a coated film. The coverage of the coated film after drying was 6 mg/m².

The average roughness of the center line of the support obtained as mentioned above was 0.55 µm, the average wavelength of a large wave was 65 µm, and the average diameter of an opening of a middle wave was 1.4 µm, the average diameter of an opening of a small wave was 0.14 µm, and a ratio of the depth to the average diameter of an opening of the small wave was 0.46.

### <Composition of undercoat layer coating solution>

Polymer resin (1) of the following structure 0.12 g
Methanol 100 g
Water 1 g

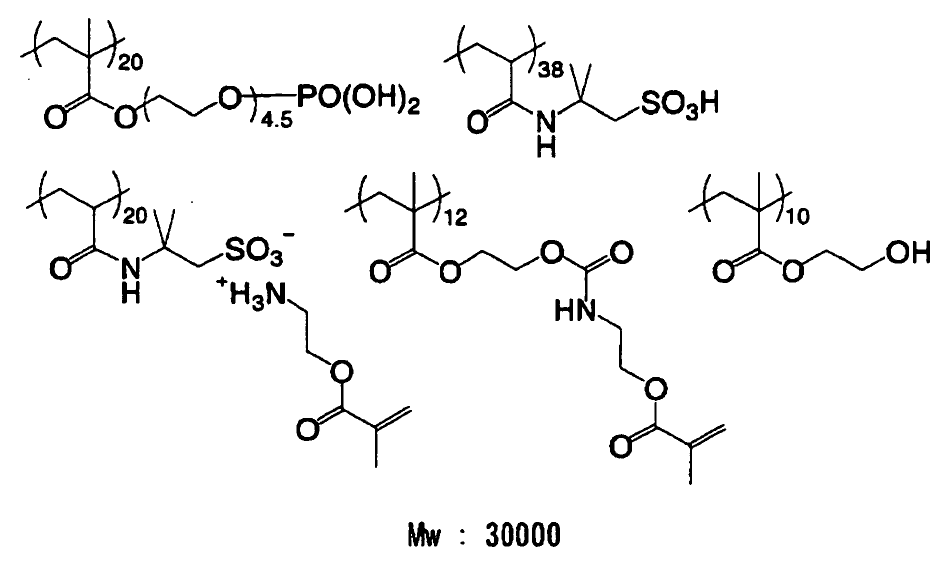

### Undercoating polymer resin (1)

First, a first embodiment of the invention will be described with reference to Examples and Comparative Examples.

### [Comparative Example 1]

### 1-1. Preparation of ink composition

As a colorant, 20 parts by mass of LINOL BLUE FG-7350 (Pigment blue 15:3, manufactured by TOYO INK MFG. CO., LTD.), and as a lipophilic substance, 30 parts by mass of a copolymer of methyl methacrylate/butyl methacrylate/stearyl methacrylate/diethylaminoethyl methacrylate (= 35/55/5/5, mass-average molecular weight = 9000) were ground in a Trio Blender (manufactured by TRIOSCIENCE LTD.), sufficiently mixed, and then molten and kneaded under heating in a table-top type, kneader PBV-0.1 (manufactured by IRIE SHOKAI CO., LTD.) at 105°C for 120 minutes (content weight ratio of colorant/lipophilic substance = 1/1.5).

The above kneaded pigment resin was roughly ground in the Trio Blender, and then finely ground in a sample mill (SK-M10 type, manufactured by Kyoritsu Riko KK). Subsequently, 22.5 parts by mass of the kneaded and finely ground material of the ground colorant and lyophilic substance, 108.75 parts by mass of ISOPAR G, 9.0 parts by mass of a 20% by mass solution prepared by heating and dissolving the following pigment dispersant (D-1) in ISOPAR G, and 400 parts by mass of glass beads having a diameter of about 3 mm were put in a 500 ml mayonnaise bottle and preliminarily dispersed by using a paint shaker (manufactured by Toyo Seiki Seisaku-sho, Ltd.). After removing the glass beads, a wet dispersion treatment was subjected to the resultant with glass beads having a diameter of 0.5 to 0.71 mm using a DYNO-MILL (KDL type, manufactured by Shinmaru Enterprise Corporation). The dispersion treatment was conducted at a rotational frequency of 2000 rpm for 2 hours by using the KDL type vessel made of glass and a rotating member comprising a zirconia ceramic disc having a diameter of 64 mm. The glass beads were removed from the obtained dispersion liquid, and a non-aqueous ink comprising 15% by mass of colorant-containing lipophilic particles was obtained.

The volume average diameter of the fine particles contained in the ink composition measured by using an ultra-centrifugal automatic particle size distribution analyzer (trade name: CAPA700, manufactured by Horiba, Ltd.) was 0. 5 µm, and the viscosity (at 20°C) of the ink composition measured by a viscometer (ELD type, manufactured by TOKIMEC INC.) was 5 mP·s.

### 1-2 Production of planographic printing plate

Subsequently, pure cyan ink was removed from an ink cartridge of an inkjet printer (trade name: PM-900C, manufactured by Seiko Epson Corporation), the inside of the ink cartridge was washed with diethylene glycol diethyl ether, continuously washed with ethanol and dried, and then filled with the ink.

The ink composition obtained in Comparative Example 1-1 was ejected onto the support (aluminum support of which the surface was hydrophilicized) of the planographic printing plate obtained in the above-described Preparative Example to form dot images. The dot images were clearly visible.

Next, the aluminum plate on which the dot images were formed was heated on a hot plate LS35C (HAKKO corporation) for 10 seconds at 120°C in which the dot images were completely thermally melted to fix the images. As a result, a planographic printing plate of Comparative Example 1 was obtained.

### 1-3 Evaluation of planographic printing plate

The planographic printing plate of Comparative Example 1 obtained from the above 1-2 was mounted in a printing press (trade name: LITHRONE, manufactured by Komori Corporation), a printing ink (trade name: BALIUS BLACK, manufactured by DAINIPPON INK AND CHEMICALS, INCORPORATED) and dampening water (trade name: IF-102, manufactured by Fuji Photo Film Co., Ltd.) were supplied thereto to perform printing.

As a result, the dot images were reduced by 3000 sheets, and therefore, it was found that the images obtained in Comparative Example 1 had low printing-resistance.

### [Example 1]

### 1-1. Preparation of ink composition

As a colorant, 16.7 parts by mass of LINOL BLUE FG-7350 (Pigment blue 15:3, manufactured by TOYO INK MFG CO., LTD.), and as a lipophilic substance, 33.3 parts by mass of a copolymer of methyl methacrylate/butyl methacrylate/stearyl methacrylate/diethylaminoethyl methacrylate (= 35/55/5/5, mass-average molecular weight = 9000) were ground in a Trio Blender (manufactured by TRIOSCIENCE LTD.), sufficiently mixed, and then molten and kneaded under heating in a table-top type, kneader PBV-0.1 (manufactured by IRIE SHOKAI CO., LTD.) at 95°C for 120 minutes (content weight ratio of colorant/lipophilic substance = 1/2).

The above knead pigment resin was roughly ground in the Trio Blender, and then finely ground in a sample mill (SK-M10 type, manufactured by Kyoritsu Riko KK).

Subsequently, 22.5 parts by mass of the kneaded material of the ground colorant and lyophilic substance, 108.75 parts by mass of ISOPAR G, 9.0 parts by mass of a 20% by mass solution prepared by heating and dissolving the following pigment dispersant (D-1) in ISOPAR G, and 400 parts by mass of glass beads having a diameter of about 3 mm were put in a 500 ml mayonnaise bottle and preliminarily dispersed by using a paint shaker (manufactured by Toyo Seiki Seisaku-sho, Ltd.). After removing the glass beads, a wet dispersion treatment was subjected to the resultant with glass beads having a diameter of 0.5 to 0.71 mm using a DYNO-MILL (KDL type, manufactured by Shinmaru Enterprise Corporation). The dispersion treatment was conducted at a rotational frequency of 2000 rpm for 2 hours by using the KDL type vessel made of glass and a rotating member comprising a zirconia ceramic disc having a diameter of 64 mm. The glass beads were removed from the obtained dispersion liquid, and a non-aqueous ink of Example 1 comprising 15% by mass of colorant-containing lipophilic substance particles was obtained.

The volume average diameter of the fine particles contained in the ink composition measured by using an ultra-centrifugal automatic particle size distribution analyzer (trade name: CAPA700, manufactured by Horiba, Ltd.) was 0.40 µm, and the viscosity (at 20°C) of the ink component measured by a viscometer (ELD type, manufactured by TOKIMEC INC.) was 5.5 mP·s.

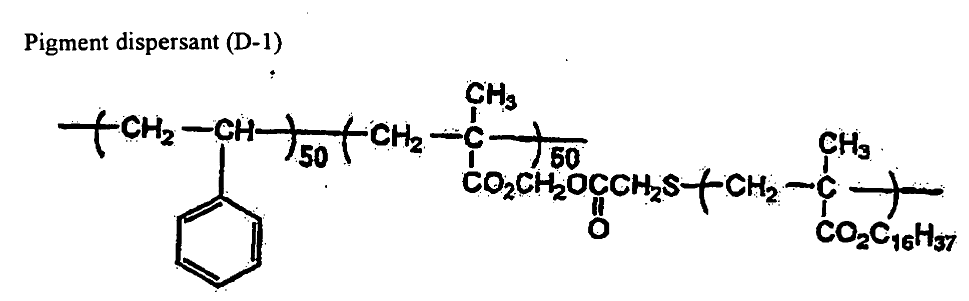

The copolymerization ratio represents mass ratio.

### 1-2 Production of planographic printing plate

Subsequently, pure cyan ink was removed from an ink cartridge of an inkjet printer (trade name: PM-900C, manufactured by Seiko Epson Corporation), the inside of the ink cartridge was washed with diethylene glycol diethyl ether, continuously washed with ethanol and dried, and then the ink composition obtained in Example 1-1 was ejected onto the support (aluminum support of which the surface was hydrophilicized) for planographic printing plate obtained in the above Preparative Example to form dot images. The dot images were clearly visible.

Next, the aluminum plate on which the dot images were formed was heated on a hot plate LS35C (HAKKO corporation) for 10 seconds at 90°C in which the dot images were completely thermally melted to fix the images. As a result, a planographic printing plate of Example 1 was obtained.

### 1-3 Evaluation of planographic printing plate

The planographic printing plate of Example 1 obtained from the above 1-2 was mounted in a printing press (trade name: LITHRONE, manufactured by Komori Corporation), a printing ink (trade name: BALIUS BLACK, manufactured by DAINIPPON INK AND CHEMICALS, INCORPORATED) and dampening water (trade name: IF-102, manufactured by Fuji Photo Film Co., Ltd.) were supplied thereto to perform printing.

As a result, 15000 sheets of high quality printing matters were obtained, and therefore, it was found that the planographic printing plate had excellent printing durability.

### [Example 2]

### 2-1 Preparation of ink composition

A non-aqueous ink of Example 2 comprising colorant-containing lipophilic substance particles was obtained in the same manner as in Example 1 (content weight ratio of colorant/liophilic substance = 1/ 7.9), except that 5.6 parts by mass of LINOL BLUE FG-7350 (Pigment blue 15:3, manufactured by TOYO INK MFG CO., LTD.) as a colorant, 44.4 parts by mass of a copolymer of methyl methacrylate/butyl methacrylate/stearyl methacrylate/diethylaminoethyl methacrylate (= 35/55/5/5, mass-average molecular weight = 9000) as a lipophilic substance and a table-top type, kneader PBV-0.1 (manufactured by IRIE SHOKAI CO., LTD.) were used and the temperature of melting and kneading under heating was 85°C.

The volume average diameter of the ink measured by using an ultra-centrifugal automatic particle size distribution analyzer (trade name: CAPA700, manufactured by Horiba, Ltd.) was 0.30 µm, and the viscosity (at 20°C) of the ink measured by a viscometer (ELD type, manufactured by TOKIMEC INC.) was 5.6 mP·s.

### 2-2 Preparation of planographic printing plate

Next, when the ink was refilled and ejected onto the hydrophilic aluminum substrate to form dot images, as in Example 1-2, even though the density of the dot images was lower than that of Example 1, the images were clear and could be visibly inspected.

Subsequently, the aluminum plate on which the dot images were formed was heated on a hot plate LS35C (HAKKO corporation) for 10 seconds at 75°C in which the dot images were completely thermally melted to fix the images. As a result, a planographic printing plate of Example 2 was obtained.

### 2-3 Evaluation of planographic printing plate

The planographic printing plate of Example 2 obtained from the above 2-2 was mounted in a printing press (trade name: LITHRONE) to perform printing using a printing ink (trade name: BALIUS BLACK) and dampening water (trade name: IF-102).

As a result, 20000 sheets of high quality printing matters were obtained, and it was found that the planographic printing plate had excellent printing durability.

### [Example 3]

### 3-1 Preparation of ink composition

A non-aqueous ink comprising colorant-containing lipophilic substance particles was obtained completely in the same manner as in Example 1 (content weight ratio of colorant/lipophilic substance = 1/ 24), except that 2 parts by mass of LINOL BLUE FG-7350 (Pigment blue 15:3, manufactured by TOYO INK MFG CO., LTD.) as a colorant, 48 parts by mass of a copolymer of methyl methacrylate/butyl methacrylate/stearyl methacrylate/diethylaminoethyl methacrylate (= 35/55/5/5, mass-average molecular weight = 9000) as a lipophilic substance and a table-top type, kneader PBV-0.1 (manufactured by IRIE SHOKAI CO., LTD.) were used and the temperature of melting and kneading under heating was 85°C.

The volume average diameter of the ink measured by using an ultra-centrifugal automatic particle size distribution analyzer (trade name: CAPA700, manufactured by Horiba, Ltd.) was 0.30 µm, and the viscosity (at 20°C) of the ink measured by a viscometer (ELD type, manufactured by TOKIMEC INC.) was 5.6 mP·s.

### 3-2 Production of planographic printing plate

Next, when the ink was refilled and ejected onto the hydrophilic aluminum substrate to form dot images, as in Example 1-2, even though the density of the dot images was further lower than that of Example 2, the images could be visibly inspected.

Subsequently, the aluminum plate on which the dot images were formed was heated on a hot plate LS35C (HAKKO corporation) for 10 seconds at 75°C in which the dot images were completely thermally melted to fix the images. As a result, a planographic printing plate of Example 3 was obtained.

### 3-3 Evaluation of planographic printing plate

The planographic printing plate of Example 3 obtained from the above 3-2 was mounted in a printing press (trade name: LITHRONE) to perform printing using a printing ink (trade name: BALIUS BLACK) and dampening water (trade name: IF-102).

As a result, 20000 sheets of high quality printing matters were obtained, and it was found that the planographic printing plate had excellent printing durability.

### [Comparative Example 2]

### 2-1 Preparation of ink composition

A non-aqueous ink comprising colorant-containing lipophilic substance particles was obtained completely in the same manner as in Example 1 (content weight ratio of colorant/lipophilic substance = 1/ 30).except that 1.6 parts by mass of LINOL BLUE FG-7350 (Pigment blue 15:3, manufactured by TOYO INK MFG CO., LTD.) as a colorant, 48.4 parts by mass of a copolymer of methyl methacrylate/butyl methacrylate/stearyl methacrylate/diethylaminoethyl methacrylate (= 35/55/5/5, mass-average molecular weight = 9000) as a lipophilic substance and a table-top type, kneader PBV-0.1 (manufactured by IRIE SHOKAI CO., LTD.) were used and the temperature of melting and kneading under heating was 85°C.

The volume average diameter of the ink measured by using an ultra-centrifugal automatic particle size distribution analyzer (trade name: CAPA700, manufactured by Horiba, Ltd.) was 0.30 µm, and the viscosity of the ink measured by a viscometer (ELD type, manufactured by TOKIMEC INC.) was 5.6 mP·s.

### 2-2 Production of planographic printing plate

Next, when the ink was refilled and ejected onto the hydrophilic aluminum substrate to form dot images, as in Example 1-2, the density of the dot images was further lower than that of Example 3 and could not visibly inspected.

Subsequently, the aluminum plate on which the dot images were formed was heated on a hot plate LS35C (HAKKO corporation) for 10 seconds at 75°C in which the dot images were completely thermally melted to fix the images. As a result, a planographic printing plate of Comparative Example 2 was obtained.

### 2-3 Evaluation of planographic printing plate

The planographic printing plate of Comparative Example 2 obtained from the above 2-2 was mounted in a printing press (trade name: LITHRONE) to perform printing using a printing ink (trade name: BALIUS BLACK) and dampening water (trade name: IF-102).

As a result, 20000 sheets of high quality printing matters were obtained, and it was found that the planographic printing plate had excellent printing durability.

The results are shown in the following Table 1.

**[Table 1]**

| | Colorant (wt) | Lipophilic substance (wt) | Colorant/ lipophilic substance | Particle diameter (µm) | Plate-inspecting property (visibility) | Fixing temperature (°C) | Printing durability (per 10000 sheets) |
|---|---|---|---|---|---|---|---|
| Comparative Example 1 | 20 | 30 | 0.67 | 0.35 | A | 105 | 0.3 (C) |
| Example 1 | 6.7 | 33.3 | 0.5 | 0.33 | A | 95 | 1.5 (AB) |
| Example 2 | 5.6 | 44.4 | 0.13 | 0.3 | A | 85 | 2.0 (A) |
| Example 3 | 2.0 | 48 | 0.04 | 0.3 | AB | 85 | 2.0 (A) |
| Comparative Example 2 | 1.6 | 48.4 | 0.03 | 0.3 | C | 85 | 2.0 (A) |

Table 1 confirmed that the planographic printing plates of Examples 1 to 3,each have excellent low-temperature fixing property, plate-inspecting property, and printing durability, since the content ratio of the colorant and the lipophilic substance is within the range defined in the invention. In the meantime, it was found that, in the planographic printing plate of Comparative Example 1 having high colorant content, the fixing temperature is high, and the printing durability is inferior. Further, in the planographic printing plate of Comparative Example 2 having high lipophilic substance content, the plate-inspecting property is not good.

Next, a second embodiment of the invention will be described with reference to Examples and Comparative Examples.

### [Comparative Example 3]

### 3-1 Preparation of ink composition

As a colorant, 5.6 parts by mass of LINOL BLUE FG-7350 (Pigment blue 15:3, manufactured by TOYO INK MFG CO., LTD.), and as a lipophilic substance, 44.4 parts by mass of a copolymer of methyl methacrylate/butyl methacrylate/stearyl methacrylate/diethylaminoethyl methacrylate (= 35/55/5/5, mass-average molecular weight = 9000) were ground in a Trio Blender (manufactured by TRIOSCIENCE LTD.), sufficiently mixed, and then molten and kneaded under heating in a table-top type, kneader PBV-0.1 (manufactured by IRIE SHOKAI CO., LTD.) at 85°C for 120 minutes. The above kneaded pigment resin was roughly ground in the Trio Blender, and then finely ground in a sample mill (SK-M10 type, manufactured by Kyoritsu Riko KK). Subsequently, a non-aqueous ink comprising colorant-containing lipophilic substance particles was obtained completely in the same manner as in Example 1-1 [content weight ratio of colorant/lipophilic substance = 1/8], [content weight ratio of (colorant + lipophilic substance)/a component soluble in a dispersion medium = 1/0.05], except that 22.5 parts by mass of the kneaded material of the ground colorant and lyophilic substance, 121.89 parts by mass of ISOPAR G and 5.63 parts by mass of a 20% by mass solution prepared by heating and dissolving the above pigment dispersant (D-1) in ISOPAR G were used.

The volume average diameter of the fine particles contained in the ink composition measured by using an ultra-centrifugal automatic particle size distribution analyzer (trade name: CAPA700, manufactured by Horiba, Ltd.) was 1.2 µm, and the viscosity of the ink component measured by a viscometer (ELD type, manufactured by TOKIMEC INC.) was 6.0 mP·s.

### 3-2 Production of planographic printing plate

Next, when the ink was refilled and ejected onto the hydrophilic aluminum substrate to form dot images, as in Example 1-2, a diameter of the dot images was 30 µm on the aluminum substrate.

Subsequently, the aluminum plate on which the dot images were formed was heated on a hot plate LS35C (HAKKO corporation) for 10 seconds at 75°C in which the dot images were completely thermally melted to fix the images. As a result, a planographic printing plate of Comparative Example 3 was obtained.

### 3-3 Evaluation of planographic printing plate

The planographic printing plate of Comparative Example 3 obtained from the above 3-2 was mounted in a printing press (trade name: LITHRONE) to perform printing using a printing ink (trade name: BALIUS BLACK) and dampening water (trade name: IF-102). As a result, a dot diameter on a printing paper was 32 µm which was slightly thick, and 15000 sheets of high quality printing materials were obtained. However, when forming dot images by using the ink composition of Comparative Example 3, the head clogged within 2 or 3 minutes, and the ejecting process was disabled.

### [Example 4]

### 4-1 Preparation of ink composition

As a colorant, 5.6 parts by mass of LINOL BLUE FG-7350 (Pigment blue 15:3, manufactured by TOYO INK MFG CO., LTD.), and as a lipophilic substance, 44.4 parts by mass of a copolymer of methyl methacrylate/butyl methacrylate/stearyl methacrylate/diethylaminoethyl methacrylate (= 35/55/5/5, mass-average molecular weight = 9000) were ground in a Trio Blender (manufactured by TRIOSCIENCE LTD.), sufficiently mixed, and then molten and kneaded under heating in a table-top type, kneader PBV-0.1 (manufactured by IRIE SHOKAI CO., LTD.) at 85°C for 120 minutes. The above kneaded pigment resin was roughly ground in the Trio Blender, and then finely ground in a sample mill (SK-M10 type, manufactured by Kyoritsu Riko KK). Subsequently, a non-aqueous ink comprising colorant-containing lipophilic substance particles was obtained [content weight ratio of colorant/lipophilic substance = 1/8], [content weight ratio of (colorant + lipophilic substance)/a component soluble in a dispersion medium = 1/0.1] was obtained completely in the same manner as in Example 1, except that 22.5 parts by mass of the kneaded material of the ground colorant and lipophilic substance, 121.89 parts by mass of ISOPAR G and 11.25 parts by mass of a 20% by mass solution prepared by heating and dissolving the above pigment dispersant (D-1) in ISOPAR G were used.

The volume average diameter of the fine particles contained in the ink composition measured by using an ultra-centrifugal automatic particle size distribution analyzer (trade name: CAPA700, manufactured by Horiba, Ltd.) was 0.51 µm, and the viscosity of the ink component measured by a viscometer (ELD type, manufactured by TOKIMEC INC.) was 5.8 mP·s.

### 4-2 Preparation of planographic printing plate

Next, when the ink was refilled and ejected onto the hydrophilic aluminum substrate to form dot images, as in Example 1-2, a diameter of the dot images was 30 µm on the aluminum substrate. Subsequently, the aluminum plate on which the dot images were formed was heated on a hot plate LS35C (HAKKO corporation) for 10 seconds at 75°C in which the dot images were completely thermally melted to fix the images. As a result, a planographic printing plate of Example 4 was obtained.

### 4-3 Evaluation of planographic printing plate

The planographic printing plate of Example 4 obtained from the above 4-2 was mounted in a printing press (trade name: LITHRONE) to perform printing using a printing ink (trade name: BALIUS BLACK) and dampening water (trade name: IF-102). As a result, a dot diameter on a printing paper was 33 µm which was slightly thick, and 20000 sheets of high quality printing materials were obtained. However, even when using the planographic printing plate for 30 minutes or more, head clogging did not occur.

### [Example 5]

### 5-1 Preparation of ink composition

As a colorant, 5.6 parts by mass of LINOL BLUE FG-7350 (Pigment blue 15:3, manufactured by TOYO INK MFG CO., LTD.), and as a lipophilic substance, 44.4 parts by mass of a copolymer of methyl methacrylate/butyl methacrylate/stearyl methacrylate/diethylaminoethyl methacrylate (= 35/55/5/5, mass-average molecular weight = 9000) were ground in a Trio Blender (manufactured by TRIOSCIENCE LTD.), sufficiently mixed, and then molten and kneaded under heating in a table-top type, kneader PBV-0.1 (manufactured by IRIE SHOKAI CO., LTD.) at 85°C for 120 minutes. The above kneaded pigment resin was roughly ground in the Trio Blender, and then finely ground in a sample mill (SK-M10 type, manufactured by Kyoritsu Riko KK). Subsequently, a non-aqueous ink comprising colorant-containing lipophilic substance particles was obtained completely in the same manner as in Example 1 [content weight ratio of colorant/lipophilic substance = 1/8], [content weight ratio of (colorant + lipophilic substance)/a component soluble in a dispersion medium = 1/0.5], except that 22.5 parts by mass of the kneaded material of the ground colorant and lipophilic substance, 71.25 parts by mass of ISOPAR G and 56.25 parts by mass of a 20% by mass solution prepared by heating and dissolving the following pigment dispersant (D-1) in ISOPAR G were used.

The volume average diameter of the fine particles contained in the ink composition measured by using an ultra-centrifugal automatic particle size distribution analyzer (trade name: CAPA700, manufactured by Horiba, Ltd.) was 0.35 µm, and the viscosity of the ink component measured by a viscometer (ELD type, manufactured by TOKIMEC INC.) was 5.3 mP·s.

### 5-2 Production of planographic printing plate

Next, when the ink was refilled and ejected onto the hydrophilic aluminum substrate to form dot images, as in Example 1-2, a diameter of the dot images was 30 µm on the aluminum substrate. Subsequently, the aluminum plate on which the dot images were formed was heated on a hot plate LS35C (HAKKO corporation) for 10 seconds at 75°C in which the dot images were completely thermally melted to fix the images. As a result, a planographic printing plate of Example 5 was obtained.

### 5-3 Evaluation of planographic printing plate

The planographic printing plate of Example 5 obtained from the above 5-2 was mounted in a printing press (trade name: LITHRONE) to perform printing using a printing ink (trade name: BALIUS BLACK) and dampening water (trade name: IF-102). As a result, a dot diameter on a printing paper was 33 µm which was slightly thick, and 20000 sheets of high quality printing materials were obtained. However, even when using the planographic printing plate for 30 minutes or more, head clogging did not occur.

### [Example 6]

### 6-1 Preparation of ink composition

As a colorant, 5.6 parts by mass of LINOL BLUE FG-7350 (Pigment blue 15:3, manufactured by TOYO INK MFG CO., LTD.), and as a lipophilic substance, 44.4 parts by mass of a copolymer of methyl methacrylate/butyl methacrylate/stearyl methacrylate/diethylaminoethyl methacrylate (= 35/55/5/5, mass-average molecular weight = 9000) were ground in a Trio Blender (manufactured by TRIOSCIENCE LTD.), sufficiently mixed, and then molten and kneaded under heating in a table-top type, kneader PBV-0.1 (manufactured by IRIE SHOKAI CO., LTD.) at 85°C for 120 minutes. The above kneaded pigment resin was roughly ground in the Trio Blender, and then finely ground in a sample mill (SK-M10 type, manufactured by Kyoritsu Riko KK). Subsequently, a non-aqueous ink comprising colorant-containing lipophilic substance particles was obtained completely in the same manner as in Example 1 [content weight ratio of colorant/lipophilic substance = 1/8], [content weight ratio of (colorant + lipophilic substance)/a component soluble in a dispersion medium = 1/1], except that 22.5 parts by mass of the kneaded material of the ground colorant and lipophilic substance, 15 parts by mass of ISOPAR G and 112.5 parts by mass of a 20% by mass solution prepared by heating and dissolving the above pigment dispersant (D-1) in ISOPAR G were used.

The volume average diameter of the fine particles contained in the ink composition measured by using an ultra-centrifugal automatic particle size distribution analyzer (trade name: CAPA700, manufactured by Horiba, Ltd.) was 0.32 µm, and the viscosity of the ink component measured by a viscometer (ELD type, manufactured by TOKIMEC INC.) was 6.1 mP·s.

### 6-2 Production of planographic printing plate

Next, when the ink was refilled and ejected onto the hydrophilic aluminum substrate to form dot images, as in Example 1-2, a diameter of the dot images was 30 µm on the aluminum substrate. Subsequently, the aluminum plate on which the dot images were formed was heated on a hot plate LS35C (HAKKO corporation) for 10 seconds at 75°C in which the dot images were completely thermally melted to fix the images. As a result, a planographic printing plate of Example 6 was obtained.

### 6-3 Evaluation of planographic printing plate

The planographic printing plate of Example 6 obtained from the above 6-2 was mounted in a printing press (trade name: LITHRONE) to perform printing using a printing ink (trade name: BALIUS BLACK) and dampening water (trade name: IF-102). As a result, a dot diameter on a printing paper was 34 µm which was slightly thick, and 20000 sheets of high quality printing materials were obtained. However, even when using the planographic printing plate for 30 minutes or more, head clogging did not occur.

### [Comparative Example 4]

### 4-1 Preparation of ink composition

As a colorant, 5.6 parts by mass of LINOL BLUE FG-7350 (Pigment blue 15:3, manufactured by TOYO INK MFG CO., LTD.), and as a lipophilic substance, 44.4 parts by mass of a copolymer of methyl methacrylate/butyl methacrylate/stearyl methacrylate/diethylaminoethyl methacrylate (= 35/55/5/5, mass-average molecular weight = 9000) were ground in a Trio Blender (manufactured by TRIOSCIENCE LTD.), sufficiently mixed, and then molten and kneaded under heating in a table-top type, kneader PBV-0.1 (manufactured by IRIE SHOKAI CO., LTD.) at 85°C for 120 minutes. The above kneaded pigment resin was roughly ground in the Trio Blender, and then finely ground in a sample mill (SK-M10 type, manufactured by Kyoritsu Riko KK). Subsequently, a nonaqueous ink comprising colorant-containing lipophilic substance particles was obtained completely in the same manner as in Example 1 [content weight ratio of colorant/lipophilic substance = 1/8], [content weight ratio of (colorant + lipophilic substance)/a component soluble in a dispersion medium = 1/1.5], except that 22.5 parts by mass of the kneaded material of the ground colorant and lipophilic substance, 43.13 parts by mass of ISOPAR G and 84.38 parts by mass of a 40% by mass solution prepared by heating and dissolving the above pigment dispersant (D-1) in ISOPAR G were used.

The volume average diameter of the fine particles contained in the ink composition measured by using an ultra-centrifugal automatic particle size distribution analyzer (trade name: CAPA700, manufactured by Horiba, Ltd.) was 0.20 µm, and the viscosity of the ink component measured by a viscometer (ELD type, manufactured by TOKIMEC INC.) was 7.5 mP·s.

### 4-2 Production of planographic printing plate

Next, when the ink was refilled and ejected onto the hydrophilic aluminum substrate to form dot images, as in Example 1-2, a diameter of the dot images was 30 µm on the aluminum substrate.

Subsequently, the aluminum plate on which the dot images were formed was heated on a hot plate LS35C (HAKKO corporation) for 10 seconds at 75°C in which the dot images were completely thermally melted to fix the images. As a result, a planographic printing plate of Comparative Example 4 was obtained.

### 4-3 Evaluation of planographic printing plate

The planographic printing plate of Comparative Example 4 obtained from the above 4-2 was mounted in a printing press (trade name: LITHRONE) to perform printing using a printing ink (trade name: BALIUS BLACK) and dampening water (trade name: IF-102). As a result, a dot diameter on a printing paper was 45 µm which was slightly thick. Even though the image quality was inferior to Examples, 20000 sheets of high quality printing materials were obtained. In this case, even when using the planographic printing plate for 30 minutes or more, head clogging did not occur.

**[Table 2]**

| | Colorant/ Lipophilic substance = 1/8 (wt) | Soluble component (wt) | Particle diameter (µm) | Dot diameter on substrate (µm) | Dot diameter on printing paper (µm) | Printing durability (per 10000 sheets) | Anti-head clogging property |
|---|---|---|---|---|---|---|---|
| Comparative Example 3 | 1 | 0.05 | 1.2 | 30 | 32 (A) | 1.5 (AB) | C |
| Example 4 | 1 | 0.1 | 0.15 | 30 | 33 (A) | 2.0 (A) | A |
| Example 5 | 1 | 0.5 | 0.30 | 30 | 33 (A) | 2.0 (A) | A |
| Example 6 | 1 | 1.0 | 0.21 | 30 | 34 (A) | 2.0 (A) | A |
| Comparative Example 4 | 1 | 1.5 | 0.22 | 30 | 45 (C) | 2.0 (A) | A |

Table 2 confirmed that in the planographic printing plate of Examples 4 to 6, since the content ratio of the colorant and the lipophilic substance is within the range defined in the invention and the content ratio of (colorant + lipophilic substance) and a component soluble in the dispersion medium is also within the range defined in the invention, the expansion of dot diameter on the recording medium when fixing was suppressed, high quality images were formed, and the head clogging was prevented. On the other hand, in Comparative Example 3 that the content ratio of the soluble component was low, the head clogging easily occurred. In Comparative Example 4 that the content ratio of the soluble component was high, the ink dot on the recording medium when fixing expanded and thus, it was difficult to form high quality images.

Even though the operation mechanism of the invention is not clear, it is possible to estimate as follows.

The ink composition of the invention is an inkjet ink composition comprising a dispersion medium, a colorant and a lipophilic substance, and the content weight ratio of the colorant and the lipophilic substance was controlled to a specific range to thus enhance lipophilicity. Therefore, it is possible to make ink particle flowable, and the fixing temperature can be changed to a low temperature: Further, the ink composition has a sufficient amount of a liophilic component that is capable of uniformly covering the colorant. As a result, it is possible to remarkably improve the adhering property of the ink composition to the substrate, print-inking property, and printing durability.

Further, when the component soluble in the dispersion medium is contained, the content weight ratio of (colorant + lipophilic substance)/ a component soluble to dispersion medium) is adjusted to a specific range, and the lipophilicity is enhanced. Therefore, it was estimated that leakage of the ejected images is wider in the substrate than in the colorant particles, and the amount of the dispersion medium and the component soluble in the dispersion medium contained in the ink is adjusted to a small amount. Further, it is possible to suppress the stain generated in a non-image portion due to the print-inking property.

By preparing an ink composition having the above-mentioned constituents using a wet-dispersing method, the colorant particles are uniformly covered with the lipophilic component. Further, since the amount of the lipophilic component is more than the amount of the colorant, it is possible to make ink particles flowable, and the fixing temperature can be changed to a low temperature. Furthermore, it is possible to remarkably improve the adhering property of the ink component to the substrate, print-inking property, and printing durability since the colorant particles are uniformly covered with the lipophilic component.

In the general ink composition conventionally used, for example, the content weight ratio of colorant/lipophilic component is about 1/0.1 to 1/2, and the content weight ratio of (colorant + lipophilic substance)/ dispersion medium component) is about 1/2 to 1/20. Therefore, it is apparent that the above mentioned excellent effects can be obtained.

According to the aspect of the invention, it is possible to provide an inkjet ink composition that is suitably used in producing a planographic printing plate using an inkjet process, and has all of the following advantages: (1) high quality ejecting image and printing image, (2) improved print-inking property and printing durability, and (3) low temperature change in thermal-melting temperature when fixing, in the formed image portion. Further, according to the production method of the invention, it is possible to easily prepare an inkjet ink composition having the above-mentioned preferable properties.

All publications, patent applications, and technical standards mentioned in this specification are herein incorporated by reference to the same extent as if each individual publication, patent application, or technical standard was specifically and individually indicated to be incorporated by reference.

## Claims

1. An ink composition for inkjet recording comprising: a dispersion medium; a colorant; and a lipophilic substance, wherein the ratio of the content of the colorant to the content of the lipophilic substance (colorant/lipophilic substance) is from 1/2 to 1/24.

2. The ink composition for inkjet recording of claim 1, further comprising a component soluble in the dispersion medium, wherein the ratio of the content of both of the colorant and the lipophilic substance to the content of the component soluble in the dispersion medium ((colorant + lipophilic substance)/component soluble in the dispersion medium) is from 1/0.1 to 1/1.

3. The ink composition for inkjet recording of claims 1 or 2, wherein the lipophilic substance is at least one selected from polymers having a mass average molecular weight in a range of from 2,000 to 1,000,000 and a polydispersity (mass average molecular weight/number average molecular weight) in a range of from 1.0 to 5.0.

4. The ink composition for inkjet recording of claims 1 or 2, wherein the lipophilic substance is at least one selected from polymers containing at least any one of constituent units represented by the following Formulae (1) to (4): 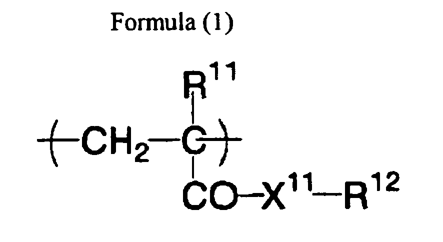 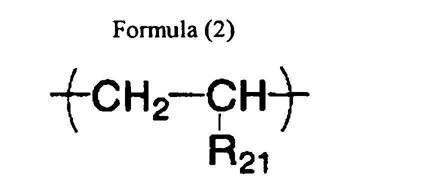 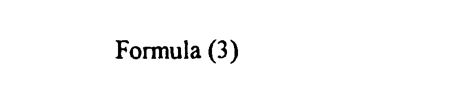 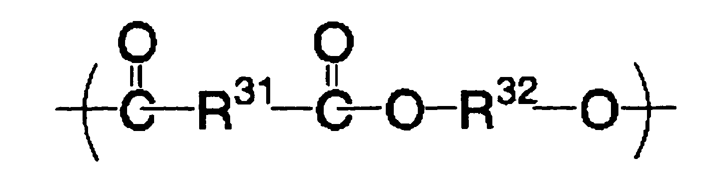 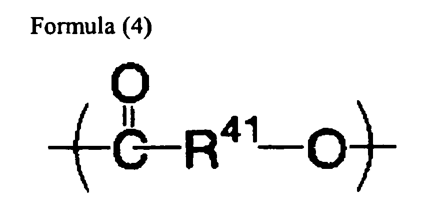 wherein X¹¹ represents an oxygen atom or -N(R¹³)-, R¹¹ represents a hydrogen atom or a methyl group, R¹² represents a hydrocarbon group having 1 to 30 carbon atoms, R¹³ represents a hydrogen atom or a hydrocarbon group having 1 to 30 carbon atoms, R²¹ represents a hydrogen atom or a hydrocarbon group having 1 to 20 carbon atoms, R³¹, R³², and R⁴¹ each represent a divalent hydrocarbon group having 1 to 20 carbon atoms, and R¹², R²¹, R³¹, R³², and R⁴¹ may respectively contain an ether bond, an amino group, a hydroxyl group, or a halogen substituent in the hydrocarbon group.

5. The ink composition for inkjet recording of claim 2, wherein the component soluble in the dispersion medium is at least one selected from polymers having a mass average molecular weight in a range of from 1,000 to 1,000,000 and a polydispersity (mass average molecular weight/number average molecular weight) in a range of from 1.0 to 7.0.

6. The ink composition for inkjet recording of claim 2, wherein the component soluble in the dispersion medium is at least one selected from graft polymers that contain at least a polymer component including at least any one of constituent units represented by the following Formulae (5) and (6) and a polymer component containing at least a constituent unit represented by the following Formula (7) as a graft chain: 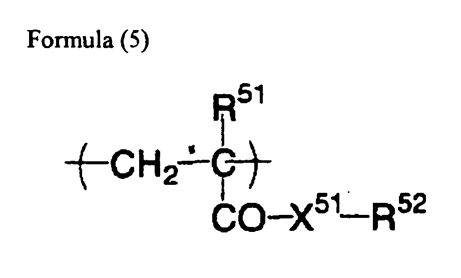 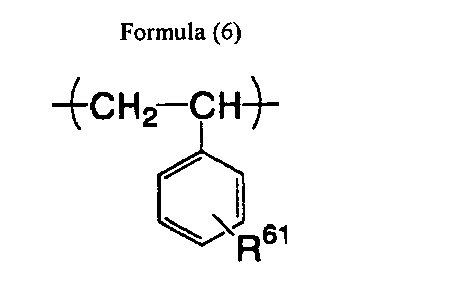 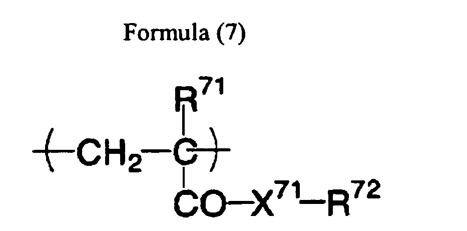 wherein X⁵¹ represents an oxygen atom or -N(R⁵³)-, R⁵¹ represents a hydrogen atom or a methyl group, R⁵² represents a hydrocarbon group having 1 to 10 carbon atoms, R⁵³ represents a hydrogen atom or a hydrocarbon group having 1 to 10 carbon atoms, R⁶¹ represents a hydrogen atom, a hydrocarbon group having 1 to 20 carbon atoms, a halogen atom, a hydroxyl group, or an alkoxy group having 1 to 20 carbon atoms, X⁷¹ represents an oxygen atom or -N(R⁷³)-, R⁷¹ represents a hydrogen atom or a methyl group, R⁷² represents a hydrocarbon group having 4 to 30 carbon atoms, R⁷³ represents a hydrogen atom or a hydrocarbon group having 1 to 30 carbon atoms, and R⁵², R⁶¹, and R⁷² may respectively contain an ether bond, an amino group, a hydroxyl group, or a halogen substituent in the hydrocarbon group.

7. A method for preparing a planographic printing plate, comprising:
applying the ink composition for inkjet recording of any one of claims 1 to 6 onto a hydrophilic support using an inkjet recording process to form an ink image; and
curing the ink image.

8. A method for preparing an ink composition, comprising:
sequentially melt-kneading a colorant and a lipophilic substance to obtain a melt-kneaded substance of a polymer containing the colorant;
crushing the melt-kneaded substance; and
wet dispersing ground particles containing the colorant and the lipophilic substance in a dispersion medium.

9. The method of claim 8, wherein the colorant and the lipophilic substance are added to a mixture containing the dispersion medium and a component soluble in the dispersion medium so as to be dispersed.

10. The method of claims 8 or 9, wherein the melt-kneading is conducted at a temperature of from 50 to 200°C for from 30 minutes to 6 hours.

11. The method of claims 8 or 9, wherein the crushing is conducted in a two-step process comprising coarse crushing and subsequent fine crushing.

12. The method of claims 8 or 9, wherein the wet dispersing is conducted in a hermetically sealed environment.

13. A method for preparing a planographic printing plate, comprising:
applying the ink composition prepared according to the method of any one of claims 8 to 12 onto a hydrophilic support using an inkjet recording process to form an ink image; and curing the ink image.

## Patentansprüche

1. Tintenzusammensetzung zum Tintenstrahlaufzeichnen umfassend ein Dispersionsmedium, einen Farbstoff und eine lipophile Substanz, wobei das Verhältnis des Gehalts des Farbstoffs zu dem Gehalt der lipophilen Substanz (Farbstoff/lipophile Substanz) 1/2 bis 1/24 beträgt.

2. Tintenzusammensetzung zum Tintenstrahlaufzeichnen gemäß Anspruch 1, ferner umfassend eine in dem Dispersionsmedium lösliche Komponente, wobei das Verhältnis des Gehalts des Farbstoffs und der lipophilen Substanz zu dem Gehalt der in dem Dispersionsmedium löslichen Komponente ((Farbstoff + lipophile Substanz)/in dem Dispersionsmedium lösliche Komponente) 1/0,1 bis 1/1 beträgt.

3. Tintenzusammensetzung zum Tintenstrahlaufzeichnen gemäß Anspruch 1 oder 2, wobei die lipophile Substanz wenigstens eine ausgewählt aus Polymeren mit einem gewichtsmittleren Molekulargewicht in einem Bereich von 2.000 bis 1.000.000 und einer Polydispersität (gewichtsmittleres Molekulargewicht/zahlenmittleren Molekulargewicht) in einem Bereich von 1,0 bis 5,0 ist.

4. Tintenzusammensetzung zum Tintenstrahlaufzeichnen gemäß den Ansprüchen 1 oder 2, wobei die lipophile Substanz wenigstens eine ausgewählt aus Polymeren ist, die wenigstens eine der durch die folgenden Formeln (1) bis (4) dargestellten Bestandteileinheiten enthalten: 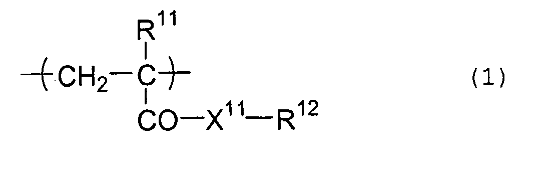 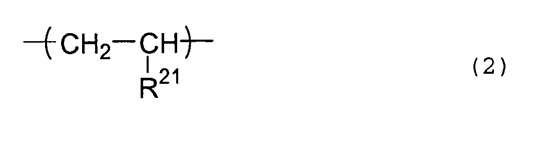 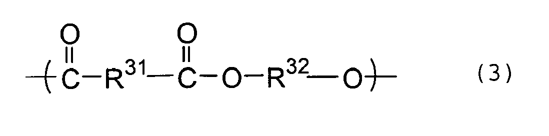 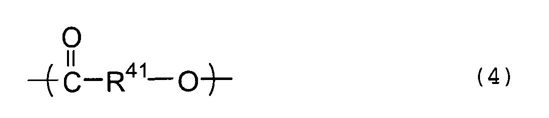 wobei X¹¹ ein Sauerstoffatom oder -N(R¹³)- darstellt, R¹¹ ein Wasserstoffatom oder eine Methylgruppe darstellt, R¹² eine Kohlenwasserstoffgruppe mit 1 bis 30 Kohlenstoffatomen darstellt, R¹³ ein Wasserstoffatom oder eine Kohlenwasserstoffgruppe mit 1 bis 30 Kohlenstoffatomen darstellt, R²¹ ein Wasserstoffatom oder eine Kohlenwasserstoffgruppe mit 1 bis 20 Kohlenstoffatomen darstellt, R³¹, R³² und R⁴¹ jeweils eine divalente Kohlenwasserstoffgruppe mit 1 bis 20 Kohlenstoffatomen darstellen und R¹², R²¹, R³¹, R³² und R⁴¹ jeweils eine Etherbindung, eine Aminogruppe, eine Hydroxylgruppe oder einen Halogensubstituenten in der Kohlenwasserstoffgruppe enthalten können.

5. Tintenzusammensetzung zum Tintenstrahlaufzeichnen gemäß Anspruch 2, wobei die in dem Dispersionsmedium lösliche Komponente wenigstens eine ausgewählt aus Polymeren mit einem gewichtsmittleren Molekulargewicht im Bereich von 1.000 bis 1.000.000 und einer Polysdispersität (gewichtsmittleren Molekulargewicht/zahlenmittleren Molekulargewicht) im einem Bereich von 1,0 bis 7,0 ist.

6. Tintenzusammensetzung zum Tintenstrahlaufzeichnen gemäß Anspruch 2, wobei die in dem Dispersionsmedium lösliche Komponente wenigstens eine ausgewählt aus Pfropfpolymeren ist, die wenigstens eine Polymerkomponente umfassend wenigstens eine durch die folgenden Formeln (5) und (6) dargestellten Bestandteileinheiten und eine Polymerkomponente enthaltend wenigstens eine durch die folgende Formel (7) dargestellte Bestandteileinheit als eine Pfropfkette enthalten: 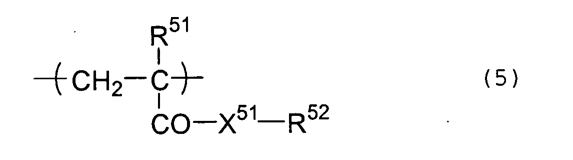 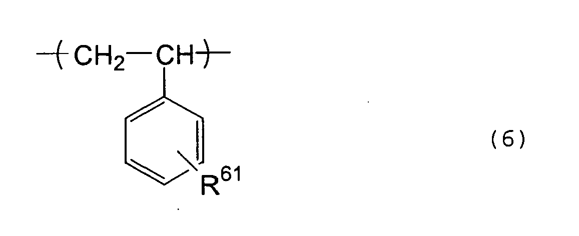 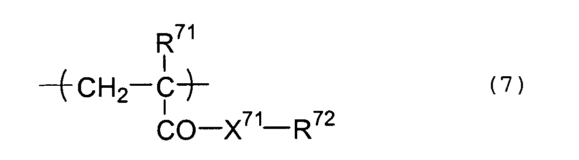 wobei X⁵¹ ein Sauerstoffatom oder -N(R⁵³)- darstellt, R⁵¹ ein Wasserstoffatom oder eine Methylgruppe darstellt, R⁵² eine Kohlenwasserstoffgruppe mit 1 bis 10 Kohlenstoffatomen darstellt, R⁵³ ein Wasserstoffatom oder eine Kohlenwasserstoffgruppe mit 1 bis 10 Kohlenstoffatomen darstellt, R⁶¹ ein Wasserstoffatom, eine Kohlenwasserstoffgruppe mit 1 bis 20 Kohlenstoffatomen, ein Halogenatom, eine Hydroxylgruppe oder eine Alkoxygruppe mit 1 bis 20 Kohlenstoffatomen darstellt, X⁷¹ ein Sauerstoffatom oder -N(R⁷³)-darstellt, R⁷¹ ein Wasserstoffatom oder eine Methylgruppe darstellt, R⁷² eine Kohlenwasserstoffgruppe mit 4 bis 30 Kohlenstoffatomen darstellt, R⁷³ ein Wasserstoffatom oder eine Kohlenwasserstoffgruppe mit 1 bis 30 Kohlenstoffatomen darstellt und R⁵², R⁶¹ und R⁷² jeweils eine Etherbindung, eine Aminogruppe, eine Hydroxylgruppe oder einen Halogensubstituenten in der Kohlenwasserstoffgruppe enthalten können.

7. Verfahren zum Herstellen einer Planografie-Druckplatte umfassend:
Aufbringen der Tintenzusammensetzung zum Tintenstrahlaufzeichnen gemäß einem der Ansprüche 1 bis 6 auf einen hydrophilen Träger unter Verwendung eines Tintenstrahlaufzeichnungsschritts, um ein Tintenbild zu bilden, und
Härten des Tintenbildes.

8. Verfahren zum Herstellen einer Tintenzusammensetzung umfassend:
aufeinanderfolgendes Schmelzkneten eines Farbstoffs und einer lipophilen Substanz, um eine schmelzgeknetete Substanz eines Polymers enthaltend den Farbstoff zu erhalten,
Zerdrücken der schmelzgekneteten Substanz und
Naßdispergieren der gemahlenen Teilchen enthaltend den Farbstoff und die lipophile Substanz in einem Dispersionsmedium.

9. Verfahren gemäß Anspruch 8, wobei der Farbstoff und die lipophile Substanz einer Mischung enthaltend das Dispersionsmedium und eine in dem Dispersionsmedium lösliche Komponente zugesetzt werden, um dispergiert zu werden.

10. Verfahren gemäß den Ansprüchen 8 oder 9, wobei das Schmelzkneten bei einer Temperatur von 50 bis 200°C 30 Minuten bis 6 Stunden lang durchgeführt wird.

11. Verfahren gemäß den Ansprüchen 8 oder 9, wobei das Zerdrücken in einem zweistufigen Verfahren umfassend grobes Zerdrücken und anschließendes feines Zerdrücken durchgeführt wird.

12. Verfahren gemäß den Ansprüchen 8 oder 9, wobei das Naßdispergieren in einer hermetisch abgeschlossenen Umgebung durchgeführt wird.

13. Verfahren zum Herstellen einer Planografie-Druckplatte umfassend:
Aufbringen der Tintenzusammensetzung, die gemäß dem Verfahren eines der Ansprüche 8 bis 12 hergestellt wurde, auf einen hydrophilen Träger unter Verwendung eines Tintenstrahlaufzeichnungsschritts, um ein Tintenbild zu bilden, und Härten des Tintenbilds.

## Revendications

1. Composition d'encre pour impression par jet d'encre, comprenant un agent de dispersion, un colorant, et une substance lipophile, dans laquelle le rapport de la teneur en colorant à la teneur en substance lipophile (colorant/substance lipophile) est de 1/2 à 1/24.

2. Composition d'encre pour impression par jet d'encre selon la revendication 1, comprenant de plus un composant soluble dans l'agent de dispersion, dans laquelle le rapport de la teneur, à la fois en colorant et en substance lipophile, à la teneur en composant soluble dans l'agent de dispersion ((colorant+substance lipophile)/composant soluble dans l'agent de dispersion) est de 1/0,1 à 1/1.

3. Composition d'encre pour impression par jet d'encre selon la revendication 1 ou 2, dans laquelle la substance lipophile est au moins l'une choisie parmi des polymères présentant un poids moléculaire moyen en masse dans l'intervalle de 2.000 à 1.000.000, et une polydispersion (poids moléculaire moyen en masse/poids moléculaire moyen en nombre) dans l'intervalle de 1,0 à 5,0.

4. Composition d'encre pour impression par jet d'encre selon la revendication 1 ou 2, dans laquelle la substance lipophile est au moins l'une choisie parmi des polymères contenant au moins l'un quelconque des motifs constitutifs représentés par les formules (1) à (4) ci-dessous 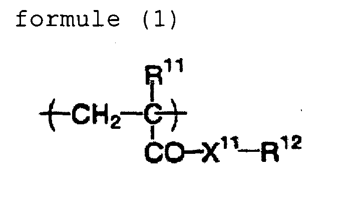 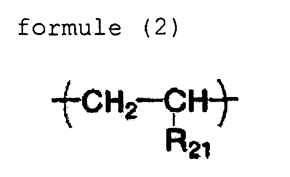 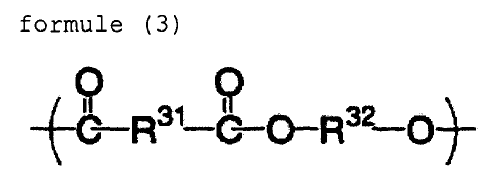 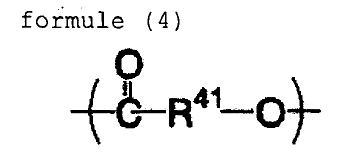 dans lesquelles X¹¹ représente un atome d'oxygène ou -N(R¹³)-, R¹¹ représente un atome d'hydrogène ou un groupement méthyle, R¹² représente un groupement hydrocarboné comptant 1 à 30 atomes de carbone, R¹³ représente un atome d'hydrogène ou un groupement hydrocarboné comptant 1 à 30 atomes de carbone, R²¹ représente un atome d'hydrogène ou un groupement hydrocarboné comptant 1 à 20 atomes de carbone, R³¹, R³² et R⁴¹ représentent chacun un groupement hydrocarboné bivalent comptant 1 à 20 atomes de carbone, et R¹², R²¹, R³¹, R³² et R⁴¹ peuvent contenir respectivement une liaison éther, un groupement amino, un groupement hydroxyle ou un substituant halogéné dans le groupement hydrocarboné.

5. Composition d'encre pour impression par jet d'encre selon la revendication 2, dans laquelle le composant soluble dans l'agent de dispersion est au moins l'un parmi des polymères présentant un poids moléculaire moyen en masse dans l'intervalle de 1.000 à 1.000.000, et une polydispersion (poids moléculaire moyen en masse/poids moléculaire moyen en nombre) dans l'intervalle de 1,0 à 7,0.

6. Composition d'encre pour impression par jet d'encre selon la revendication 2, dans laquelle le composant soluble dans l'agent de dispersion est au moins l'un parmi des polymères greffés qui contiennent au moins un composant polymère comprenant au moins un constituant représenté par les formules (5) et (6) ci-dessous et au moins un composant polymère contenant au moins un motif constitutif représenté par la formule (7) sous la forme d'une chaîne greffée 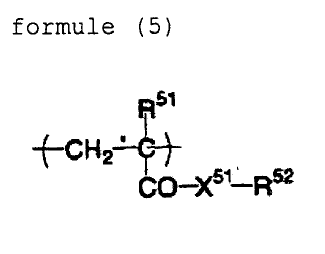 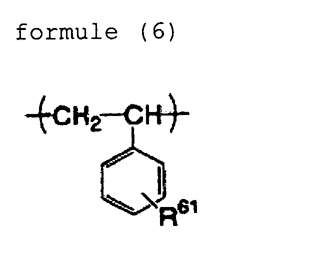 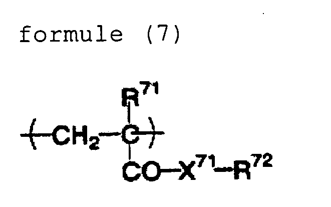 dans lesquelles X⁵¹ représente un atome d'oxygène ou -N(R⁵³)-, R⁵¹ représente un atome d'hydrogène ou un groupement méthyle, R⁵² représente un groupement hydrocarboné comptant 1 à 10 atomes de carbone, R⁵³ représente un atome d'hydrogène ou un groupement hydrocarboné comptant 1 à 10 atomes de carbone, R⁶¹ représente un atome d'hydrogène, un groupement hydrocarboné comptant 1 à 20 atomes de carbone, un atome d'halogène, un groupement hydroxyle ou un groupement alkoxy comptant 1 à 20 atomes de carbone, X⁷¹ représente un atome d'oxygène ou -N(R⁷³)-, R⁷¹ représente un atome d'hydrogène ou un groupement méthyle, R⁷² représente un groupement hydrocarboné comptant 4 à 30 atomes de carbone, R⁷³ représente un atome d'hydrogène ou un groupement hydrocarboné comptant 1 à 30 atomes de carbone, et R⁵², R⁶¹ et R⁷² peuvent contenir respectivement une liaison éther, un groupement amino, un groupement hydroxyle ou un substituant halogéné dans le groupement hydrocarboné.

7. Procédé de préparation d'une plaque d'impression planographique, comprenant les étapes consistant à
appliquer la composition d'encre pour impression par jet d'encre selon l'une quelconque des revendications 1 à 6 sur un support hydrophile en utilisant un procédé d'impression par jet d'encre pour former une image d'encre, et
fixer l'image d'encre.

8. Procédé de préparation d'une composition d'encre, comprenant les étapes consistant à:
malaxer séquentiellement au fondu un colorant et une substance lipophile pour obtenir une substance malaxée au fondu d'un polymère contenant le colorant,
concasser la substance malaxée au fondu, et
disperser à l'état humide des particules broyées contenant le colorant et la substance lipophile dans un agent de dispersion.

9. Procédé selon la revendication 8, dans lequel le colorant et la substance lipophile sont ajoutés à un mélange contenant l'agent de dispersion et un composant soluble dans l'agent de dispersion, de façon à être dispersés.

10. Procédé selon la revendication 8 ou 9, dans lequel le malaxage au fondu est conduit à une température de 50 à 200 °C pendant 30 minutes à 6 heures.

11. Procédé selon la revendication 8 ou 9, dans lequel le concassage est conduit dans un processus en deux étapes comprenant un concassage grossier et ensuite un concassage fin.

12. Procédé selon la revendication 8 ou 9, dans lequel la dispersion à l'état humide est conduite dans un milieu hermétiquement clos.

13. Procédé de préparation d'une plaque d'impression paléographique, comprenant
l'application de la composition d'encre préparée par le procédé selon l'une quelconque des revendications 8 à 12 sur un support hydrophile en utilisant un procédé d'impression par jet d'encre pour former une image d'encre; et fixer l'image d'encre.
